# EUROPEAN PATENT SPECIFICATION

(11) **EP 2 107 477 B1**
(45) Date of publication and mention of the grant of the patent: **25.11.2015**
(21) Application number: 09009087.9
(22) Date of filing: 07.01.2005
(51) Int. Cl.: G06F 17/30, G11B 27/28, H04N 21/432, H04N 21/439

(54) **Summarizing reproduction device and summarizing reproduction method**
Zusammenfassende Wiedergabevorrichtung und zusammenfassendes Wiedergabeverfahren
Dispositif de reproduction d'un résumé et procédé de reproduction d'un résumé

(30) Priority: 14.01.2004 US 757138; 13.02.2004 US 779105
(43) Date of publication of application: 07.10.2009
(62) Divisional of application: 05703361.5
(73) Proprietor: MITSUBISHI DENKI KABUSHIKI KAISHA, Chiyoda-ku Tokyo 100-8310 (JP)
(72) Inventor: Otsuka, Isao, Tokyo 100-8310 (JP); Nakane, Kazuhiko, Tokyo 100-8310 (JP); Ogawa, Masaharu, Tokyo 100-8310 (JP); Divakaran, Ajay, Burlington, Massachusetts 01803 (US)
(74) Representative: Whitlock, Holly Elizabeth Ann

(56) References cited:
- EP-A- 0 890 910
- EP-A2- 1 083 568
- US-A1- 2003 112 265
- US-B1- 6 366 296
- FOOTE J ET AL: "AN INTELLIGENT MEDIA BROWSER USING AUTOMATIC MULTIMODAL ANALYSIS", PROC. 6TH ACM INTERNATIONAL MULTIMEDIA CONFERENCE, BRISTOL, UK, 12 September 1998 (1998-09-12), pages 375-380, XP000977532, DOI: DOI:10.1145/290747.290804 ISBN: 978-1-58113-036-2
- AJAY DIVAKARAN ET AL: "Audio-assisted video browsing for DVD recorders", ADVANCES IN MULTIMEDIA INFORMATION PROCESSING - PCM 2004. 5TH PACIFIC RIM CONFERENCE ON MULTIMEDIA. PROCEEDINGS, PART II (LECTURE NOTES IN COMPUTER SCIENCE VOL.3332) SPRINGER-VERLAG BERLIN, GERMANY, 2004, pages 27-33, XP002517788, ISBN: 3-540-23977-4
- NAKANE K ET AL: "A content-based browsing system for a HDD and/or recordable-DVD personal video recorder", 2003 DIGEST OF TECHNICAL PAPERS. INTERNATIONAL CONFERENCE ON CONSUMER ELECTRONICS (CAT. NO.03CH37416) IEEE PISCATAWAY, NJ, USA, 2003, pages 26-27, XP002517787, ISBN: 0-7803-7721-4

## Description

### Technical Field

This invention relates generally to processing multimedia, and more particularly to recording video signals, audio signals, text, and binary data on storage media, and for reproducing selected portions of the multimedia.

### Background Art

In order to quickly review and analyze a video, for example a movie, a recorded sporting event or a news broadcast, a summary of the video can be generated. A number of techniques are known for summarizing uncompressed and compressed videos.

The conventional practice for summarizing videos is to first segment the video into scenes or 'shots', and then to extract low and high level features. The low level features are usually based on syntactic characteristics such as color, motion, and audio components, while the high level features are semantic information.

The features are then classified, and the shots can be further segmented according to the classified features. The segments can be converted to short image sequences, for example, one or two seconds 'clips' or 'still' frames, and labeled and indexed. Thus, the reviewer can quickly scan the summary to select portions of the video to playback in detail. Obviously, the problem with such summaries is that the playback can only be based on the features and classifications used to generate the summary.

In order to further assist the review, the segments can be subjectively rank ordered according to a relative importance. Thus, important events in the video, such as climactic scenes, or goal scoring opportunities can be quickly identified (see, for example, Non-Patent Document 1 and Non-Patent Document 2). The viewer can use fast-forward or fast-reverse capabilities of the playback device to view segments of interest in the important segments (see, for example, Non-Patent Document 3).

Another technique for summing a news video uses motion activity descriptors (see, for example, Patent Document 1). A technique for generating soccer highlights uses a combination of video and audio features (see, for example, Patent Document 2). Audio and video features can also be used to generate highlights for news, soccer, baseball and golf videos (see, for example, Patent Document 3). Those techniques extract key segments of notable events from the video, such a scoring opportunity or an introduction to a news story. The original video is thus represented by an abstract that includes the extracted key segments. The key segments can provide entry points into the original content and thus allow flexible and convenient navigation.

Further, upon recording an input signal corresponding to the video, the conventional program search apparatus extracts predetermined information from the input signal, and fragments the video (video/audio stream) corresponding to the input signal on a time base depending on the type of information to obtain video shots. Subsequently, the video shots are classified into predetermined categories, and recorded on a recording medium along with a reproduction time position information (information indicating where the video shots are located on the recording medium). Then, in the case where the viewer quickly scans a program recorded on the recording medium in a short period of time, only the video shots that belong to a category corresponding to the type of information selected by the viewer are reproduced continuously (see, for example, Patent Document 4).

Further, a table set in another program search apparatus overviews reproduction time position information on video shots within their reproduction time ranges, which has been segmented according to the importance level. Upon reproduction, the program search apparatus performs the reproduction based on the reproduction time position information described in the table corresponding to the importance level designated by the viewer (see, for example, Non-Patent Document 1).

Patent Document 1: U.S. Patent Application serial number 09/845,009;

Patent Document 2: U.S. Patent Application serial number 10/046,790;

Patent Document 3: U.S. Patent Application serial number 10/374,017;

Patent Document 4: Japanese Patent Laid Open Number 2000-125243 (page 11, Fig. 1);

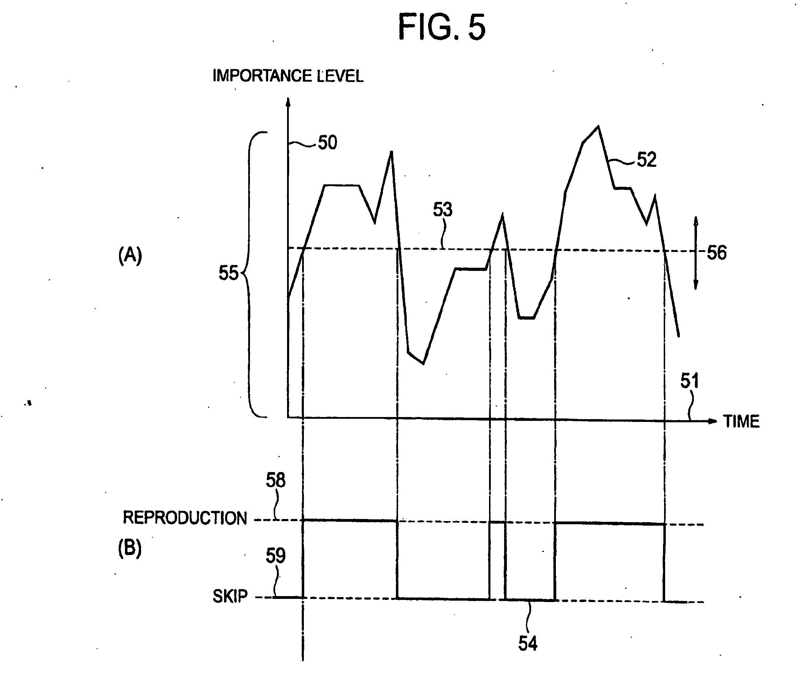

Non-Patent Document 1: Fujiwara et al. "Abstractive Description of Video Using Summary DS", Point-illustrated Broadband + Mobile Standard MPEG Textbook, ASCII Corp., p.177, Figs. 5-24, February 11, 2003;

Non-Patent Document 2: " ISO/IEC 15938-5:2002 Information Technology-Multimedia content description interface - Part 5: Multimedia Description Schemes", 2002; and

Non-Patent Document 3: DVD recorder "DVR-7000 Instruction Manual", Pioneer Co., Ltd., p. 49, 2001.

U.S. Patent No. 6,366,296 relates to a media browser, and user-selected features of media file such as the identity of a speaker, applause, silence, motion, or video cuts etc. Feature information for a selected feature is mapped to a corresponding confidence score value that represents a probability of corresponding feature's existence in the media file. Confidence score information is preferably presented graphically.

Nakane K. et al. "A content-based browsing system for a HDD and/or recordable-DVD personal video recorder", 2003 Digest of Technical Papers. International Conference on Consumer Electronics (CAT No.03CH37416) IEEE, USA, 2003, pages 26-27, XP002517787, ISBN: 0-7803-7721-4 relates to a personal video recorder such as a Recordable-DVD Recorder and/or Hard Disk Recorder having an intra-program content browsing system using a combination of motion based video summarization and topic-related metadata in the incoming video stream and an audio-assisted video browsing feature that enables completely automatic topic-based browsing.

### Disclosure of Invention

There are a number of problems with prior art video recording, summarization and playback. First, the summary is based on some preconceived notion of the extracted features, classifications, and importance, instead of those of the viewer. Second, if importance levels are used, the importance levels are usually quantized to a very small number of levels, for example, five or less. More often, only two levels are used, i.e., the level of the interesting segments, and the level of the rest of the video.

In particular, the hierarchical description proposed in the MPEG-7 standard is very cumbersome if a fine quantization of the importance is used because the number of levels in the hierarchy becomes very large, which in turn requires management of too many levels.

The MPEG-7 description requires editing of the metadata whenever the content is edited. For example, if a segment is cut out of the original content, all the levels affected by the cut need to be modified. That can get cumbersome quickly as the number of editing operations increases.

The importance levels are highly subjective, and highly context dependent. That is, the importance levels for sports videos depend on the particular sports genre, and are totally inapplicable to movies and news programs. Further, the viewer has no control over the length of the summary to be generated.

The small number of subjective levels used by the prior art techniques make it practically impossible for the viewer to edit and combine several different videos based on the summaries to generate a derivate video that reflects the interests of the viewer.

Further, the conventional search apparatus has several problems. First, the program search apparatus as described in the Non-Patent Document 3 (DVD recorder "DVR-7000" Instruction Manual) requires the viewer to perform a cumbersome operation for setting (stamping) a chapter mark in (on) the viewer's favorite scene based on the viewer's subjective notion.

Further, the program search apparatus as described in the Patent Document 4 (Japanese Patent Laid Open Number 2000-125243) or in the Non-Patent Document 1 (Point-illustrated Broadband + Mobile Standard MPEG Textbook) allows reproduction according to the selection by the viewer, but in selection of a video on a predetermined table or category basis, it is difficult to grasp the tendency of a ground swell in the entire video recorded on the recording medium (for example, the flow of a game on the sports program). In particular, if the video recorded on the recording medium is viewed by the viewer for the first time, it is impossible to grasp the tendency of a ground swell in the entire video.

Therefore, this invention is made to solve the above problems, one object of this invention is to provide a system and method for summarizing multimedia in which a video is recorded and reproduced in a manner that can be controlled by the viewer. Furthermore, there is a need for specifying importance levels that are content independent, and not subjective. In addition, there is a need to provide more of discrete importance levels. Lastly, there is a need to enable the viewer to generate a summary of any length, depending on a viewer-selected level of importance.

Aspects of the invention are set out in the claims.

According to this invention, it is possible tc create a summary having an arbitrary length (reproduction time) of the user's own selection.

### Brief Description of the Drawings

Figure 1 is a block diagram of a system for reproducing multimedia according to Embodiment 1 of the present invention;
Figure 2 is a block diagram of a file structure for multimedia according to Embodiment 1 of the present invention;
Figure 3 is a block diagram of a data structure of a metadata file according to Embodiment 1 of the present invention;
Figure 4 is a block diagram of indexing the multimedia according to Embodiment 1 of the present invention using the metadata file;
Figure 5 is a graph representing an abstractive reproduction according to Embodiment 1 of the present invention;
Figure 6A is a graph of an alternative abstractive reproduction according to Embodiment 1 of the present invention and Figure 6B is a graphics image representing an abstraction ratio;
Figure 7 is a block diagram of a system for recording compressed multimedia files and metadata files on a storage media according to Embodiment 1 of the present invention;
Figure 8 is a graph of an alternative abstractive reproduction according to Embodiment 1 of the present invention;
Figure 9 is a graph of an alternative abstractive reproduction according to Embodiment 1 of the present invention;
Figure 10 is a graph of an alternative abstractive reproduction according to Embodiment 1 of the present invention;
Figure 11 is a block diagram of a system for recording multimedia according to Embodiment 1 of the present invention;
Figure 12 is a block diagram of multimedia content partitioned into windows;
Figure 13 is a block diagram showing a structure of a video search apparatus according to Embodiment 2 of the present invention;
Figure 14 is an explanatory view of an OSD image of the video search apparatus according to Embodiment 2 of the present invention;
Figure 15 is an explanatory view of a video displayed on a video output terminal 130 of a monitor, a television, etc. connected to the video search apparatus upon browsing the video in the video search apparatus according to Embodiment 2 of the present invention;
Figure 16 is an explanatory view of an image displayed upon browsing the video in a video search apparatus according to Embodiment 3 of the present invention;
Figure 17 is an explanatory view of an image displayed upon browsing the video in a video search apparatus according to Embodiment 4 of the present invention;
Figure 18 is an explanatory view of an image displayed upon browsing the video in a video search apparatus according to Embodiment 5 of the present invention;
Figure 19 is an explanatory view of an image displayed upon browsing the video in a video search apparatus according to Embodiment 6 of the present invention;
Figure 20 is an explanatory view of a method of creating an important scene indication bar of the video search apparatus according to Embodiment 6 of the present invention;
Figure 21 is an explanatory view of an image displayed upon browsing the video in a video search apparatus according to Embodiment 7 of the present invention;
Figure 22 is an explanatory view of a sliding bar and slide display indicator of the video search apparatus according to Embodiment 7 of the present invention;
Figure 23 is a block diagram showing a structure of a recorder according to Embodiment 8 of the present invention;
Figure 24 is an explanatory view of CM detection in a CM detecting section;
Figure 25 is an explanatory view of modification on an importance level in a metadata generating section; and
Figure 26 is a block diagram of a structure of another recorder according to Embodiment 8 of the present invention.

### Best Mode for carrying out the Invention

### Summary of the Invention

A system and method according to the present invention for summarizing multimedia summarizes multimedia stored in a compressed multimedia file partitioned into segments.

An associated metadata file includes index information and importance level information for each segment in the sequence. In a preferred embodiment, the files are stored on a storage medium such as a DVD.

The importance information is continuous over a closed interval. An importance level threshold, or range, is selected in the closed interval. The importance level can be viewer selected, and based on the audio signal, for example, an audio classification and/or an audio volume.

When the files are read, only segments of the multimedia having a particular importance level greater than the importance level threshold are reproduced.

To further improve the accuracy of the summarization, the importance level can be based on windows of segments. In this case, the content can be partitioned into windows of fixed length, or a sliding window.

### Embodiment 1.

### Reproducing System Structure

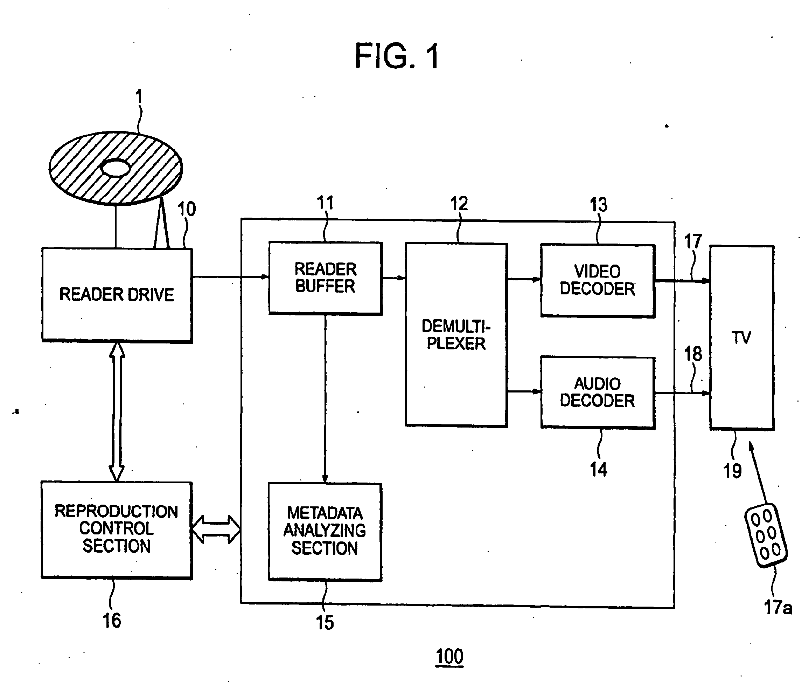

Figure 1 shows a system 100 for reproducing multimedia, where the content of the multimedia is, for example, video signals, audio signals, text, and binary data. The system includes a storage media 1, such as a disc or tape, for storing multimedia and metadata organized as files in directories. In the preferred embodiment, the multimedia is compressed using, e.g., MPEG and AC-3 standards. The multimedia has been segmented, classified, and indexed using known techniques. The indexing can be based on time or frame number, see U.S Patent 6,628,892, incorporated herein by reference.

The metadata includes index and importance information. As an advantage of the present invention, and in contrast with the prior art, the importance information is continuous over a closed interval, e.g., [0, 1] or [0, 100]. Therefore, the importance level, is not in terms of 'goal' or 'head-line-news-time', but rather a real number, e.g., the importance is 0.567 or +73.64.

As an additional advantage, the continuous importance information is context and content independent, and not highly subjective as in the prior art. Both of these features enable a viewer to reproduce the multimedia to any desired length.

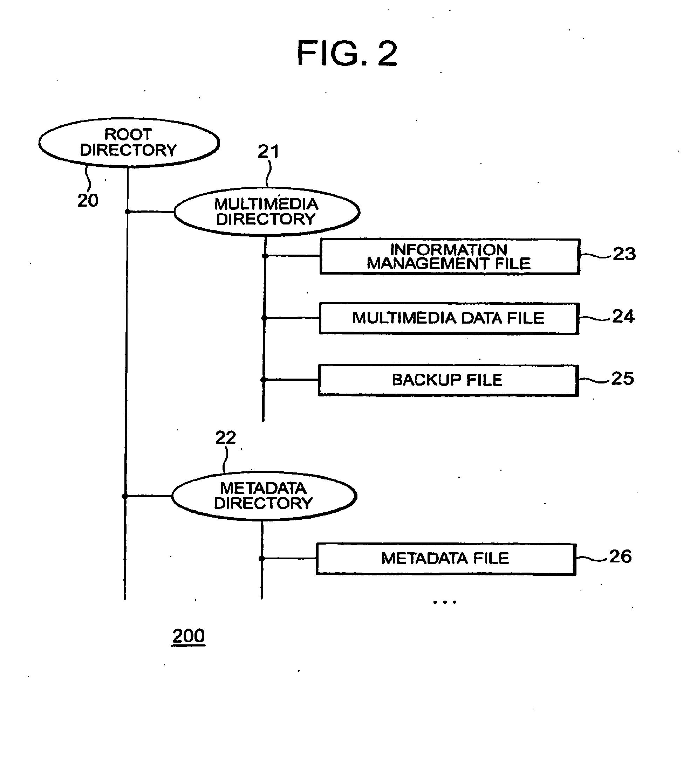

The metadata can be binary or text, and if necessary, protected by encryption. The metadata can include file attributes such as dates, validity codes, file types, etc. The hierarchical file and directory structure for the multimedia and metadata are as shown in Figure 2.

As shown in Figure 1, a reader drive 10 reads the multimedia and metadata files from the storage media 1. A read buffer 11 temporarily stores data read by the reader drive 10. A demultiplexer 12 acquires, sequentially, multimedia data from the read buffer, and separates the multimedia data into a video stream and an audio stream.

A video decoder 13 processes a video signal 17, and an audio decoder 14 processes the audio signal 18 for an output device, e.g., a television monitor 19.

A metadata analyzing section 15 acquires sequentially metadata from the read buffer 11. A reproduction control section 16, including a processor, controls the system 100. The functionality of the metadata analyzing section 15 can be implemented with software, and can be incorporated as part of the reproduction control section 16.

Note that for any implementation described herein the multimedia files and the metadata files do not need to be recorded and reproduced concurrently. In fact, the metadata file can be analyzed independently to enable the viewer to quickly locate segments of interest in the multimedia files. In addition, the multimedia and the metadata can be multiplexed into a single file, and demultiplexed when read. File and Directory Structure

Figure 2 shows the hierarchical structure 200 of the files and directories stored on the media 1. A root directory 20 includes a multimedia directory 21 and a metadata directory 22. The multimedia directory 21 stores information management files 23, multimedia files 24, and backup files 25. The metadata directory 22 stores metadata files 26. Note that other directory and file structures are possible. The data in the multimedia files 24 contains the multiplexed video and/or audio signals.

Note that either the information management files 23 and/or the multimedia data files 24 can includes flags indicating the presence or absence or invalidity of the metadata.

### Metadata Structure

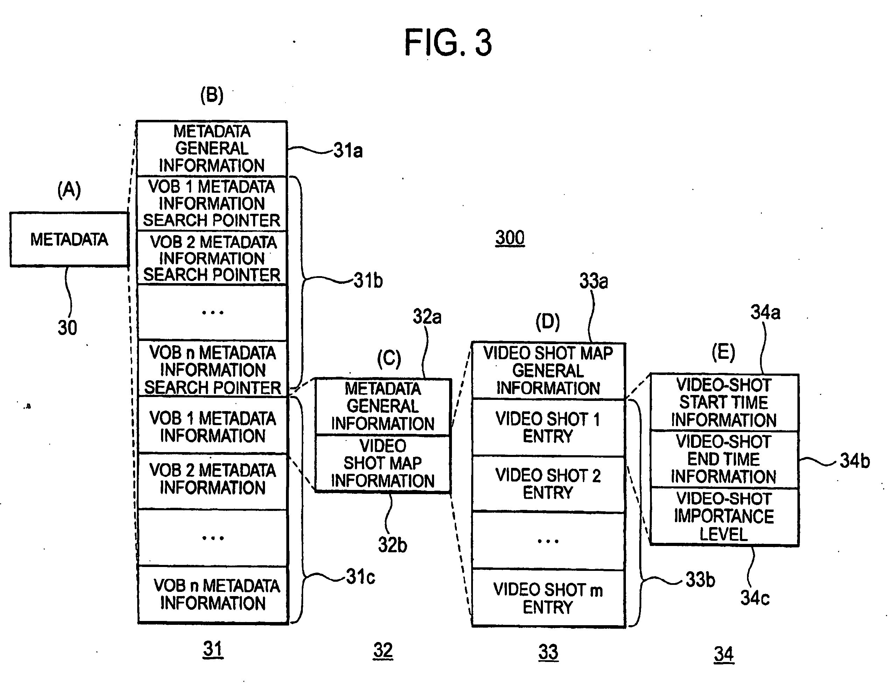

Figure 3 shows the hierarchical structure 300 of the metadata files 26. There are five levels A-E in the hierarchy, including metadata 30 at a highest level, followed by management information 31, general information 32, shot information 33, and index and importance information 34.

The metadata managing information 31 at level B includes a comprehensive description 31a of the overall metadata 30, video object (VOB) metadata information search pointer entries 31b, and associated VOB information entries 31c. The associations do not need to be one-to-one, for instance, there can multiple pointers 31b for one information entry 31c, or one information entry for multiple VOBs, or none at all.

At the next level C, each VOB information entry 31c includes metadata general information 32a, and video shot map information 32b. The metadata general information 32a can includes program names, producer names, actor/actress/reporter/player names, an explanation of the content, broadcast date, time, and channel, and so forth. The exact correspondences are stored as a table in the general information entry 32a.

At the next level D, for each video shot map information entry 32b there is video shot map general information 33a, and one or more video shot entries 33b. As above, there does not need to be a one-to-one correspondence between these entries. The exact correspondences are stored as a table in the general information entry 33a.

At the next level E, for each video shot entry 33b, there are start time information 34a, end time information 34b, and an importance level 34c. As stated above, frame numbers can also index the multimedia. The index information can be omitted if the index data can be obtained from the video shot reproducing time information 34a. Any ranking system can be used for indicating the relative importance. As stated above, the importance level can be continuous and content independent. The importance level can be added manually or automatically.

Note that Figure 3 is referenced to describe a case where the metadata file 200 is divided into 5 levels. However, an arbitrary number of levels can be employed insofar as there are involved a video-shot importance level 34c, and time information or index information whereby reproduction position information about a video shot corresponding to the video shot importance level 34c can be identified. Also, Figure 3 is referenced to describe the case where the metadata of all video objects is processed as one file in the metadata file 26, but it is possible to independently set metadata files for each video object, for example.

### Multimedia Indexing

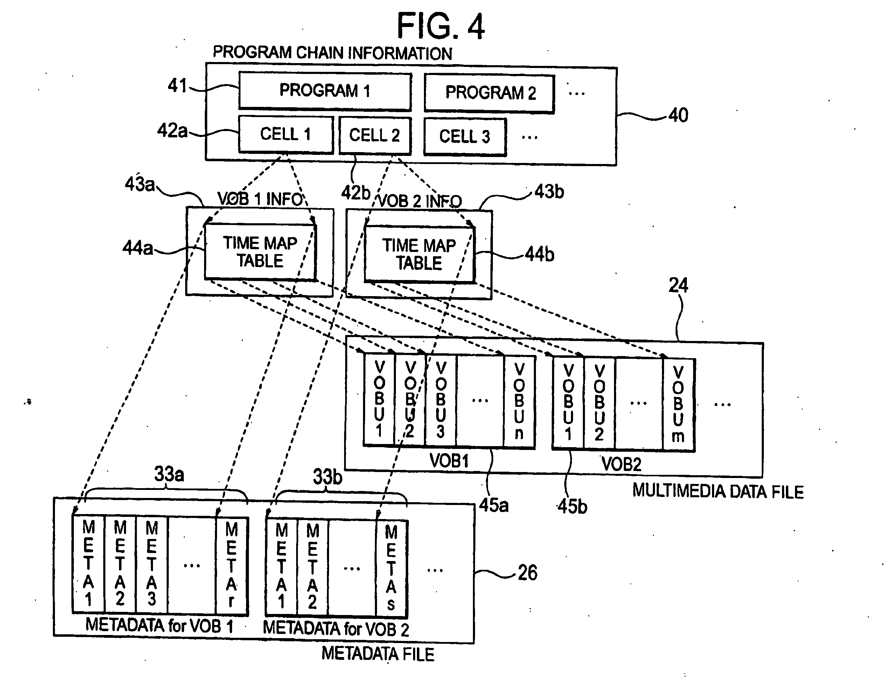

Figure 4 shows the relationship between the multimedia recorded and reproduced according to an embodiment of the invention, and the metadata. Program chain information 40 stored in the management information file 23 describes a sequence for reproducing multimedia of a multimedia data file 24. The chain information includes programs 41 based on a reproducing unit as defined by the program chain information 40. Cells 42a-b are based on a reproducing unit as defined by the program 41. In digital versatile disc (DVD) type of media, a 'cell' is a data structure to represent a portion of a video program.

Video object information 43a-b describes a reference destination of the actual video or audio data corresponding to the reproducing time information, i.e., presentation time, designated by the cell 42 described in the management information file 23.

Map tables 44a-b are for offsetting the reproducing time information defined by the VOB information 43 and converting the same into actual video data or audio data address information. Video object units (VOBU) 45a and 45b describe the actual video or audio data in the multimedia data file 24. These data are multiplexed in a packet structure, together with the reproducing time information. The VOBUs are the smallest units for accessing and reproducing the multimedia. A VOBU includes one or more group-of-pictures (GOP) of the content.

### Importance Threshold Based Reproduction

Figure 5 shows the abstractive reproduction according to an embodiment of the invention, where the horizontal axis 51 defines time and the vertical axis 50 defines an importance level. As shown in Figure 5, the importance level varies continuously over a closed interval 55, e.g., [0, 1] or [0, 100]. Also, as shown, the importance level threshold 53 can be varied 56 by the viewer over the interval 55.

The time is in terms of the video-shot start time information 34a and the video-shot end time information 34b of Figure 3. The importance is in terms of the video-shot importance level 34c. An example importance curve 52 is evaluated according to an importance threshold 53.

During a reproduction of the multimedia, portions of the multimedia that have an importance greater than the threshold 53 are reproduced 58 while portions that have an importance less than the threshold are skipped 59. The curve 54 indicates the portions that are included in the reproduction. The reproduction is accomplished using the reproducing control section 16 based on the metadata information obtained from the metadata analyzing section 15.

Note that multiple continuous importance levels, or one or more importance level ranges can be specified so that only segments having a particular importance according to the real number values in the importance ranges are reproduced. Alternatively, only the least important segments can be reproduced.

To reproduce a desired program, the information management file 23 is read by the reader drive 10. This allows one to determine that the program is configured as, e.g., two cells.

Each cell is described by a VOB number and index information, e.g., a start and end time. The time map table 44a for the VOB1 information 43a is used to convert each presentation time to a presentation time stamp (PTS), or address information in the VOB1 concerned, thus obtaining an actual VOBU 45.

Likewise, the cell-2 42b is also obtained with a VOBU 45b group of VOB2 by the use of a time map table 44b of VOB2 information 43b. In this example, a cell, in this case, cell 42b, is indexed by the VOB 43b using the time map table 44b.

The data of the VOBUs 45 are provide sequentially for demuliplexing and decoding. The video signal 17 and the audio signal 18 are synchronized using the presentation time (PTM) and provided to the output device 19.

When the viewer selects a desired program e.g. program 1 41, the cells 42a-b that contain the configuration of the relevant program 41 can be found by the program chain information 40. The program chain information is thus used to find the corresponding VOB as well as the presentation time (PTM).

The metadata 26 described in Figure 4 is used as follows, and as illustrated in Figure 3. First, the metadata information management information 31a is used to locate the metadata information search pointer 31b corresponding to the desired VOB number. Then, the search pointer 31b is used to locate the VOB metadata information 31c. The VOB metadata information 31c includes video shot map information 32b, which in turn includes the start time, stop time and importance level of each of the video shots. Thus, the VOB metadata is used to collect all the shots that have a presentation time (PTM) included in the range specified by the start time and end time of the cell, as well as their corresponding importance levels. Then, only those portions that exceed the desired importance level 53 are retained.

Note that multiple programs can be selected for reproduction, and any number of techniques are possible to concatenate only the reproduced segments.

### Alternative Abstractive Reproduction

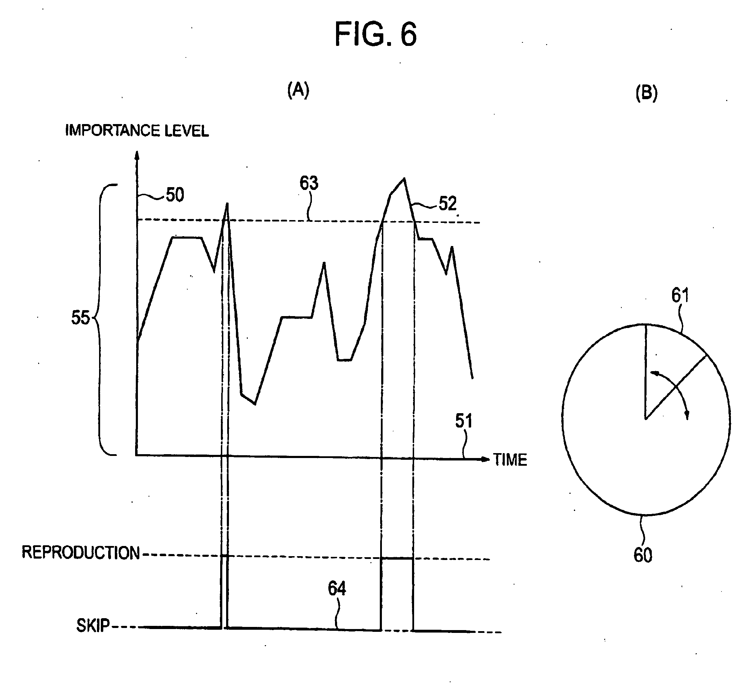

Figure 6A shows an alternative abstractive reproduction according to an embodiment of the invention, where the vertical axis 50 defines an importance level, the horizontal axis 51 defines time, and the continuous curve 52 indicates importance levels. Line 63 is an importance level threshold, and line 64 a reproduction for only those segments that have a particular importance greater than the threshold. Other segments are skipped.

### Abstraction Ratio

Figure 6B shows an abstraction ratio 60. The abstraction ratio can vary, e.g., from 0% to 100%, i.e., over the entire interval 55. The abstract ratio is shown as a graphics image superposed on an output image on the output device 19, which can be a playback device. A portion 61 is a current abstraction ratio that is user selectable. The threshold 63 is set according to the user selectable current abstraction ratio 61. The user can set the abstraction ratio using some input device, e.g., a keyboard or remote control 17a, see Figure 1. If the abstraction ratio is 100%, then the entire multimedia file is reproduced, a ratio of 50% only reproduces half of the file. The abstraction ratio can be changed during the reproduction. It should be noted, that the graphics image can have other forms, for example, a sliding bar, or a numerical display in terms of the ratio or actual time. Alternatively, the abstraction ratio can be varied automatically by the metadata analyzing section 15 or the reproducing control section 16.

It should be noted, that pointers to the video segments can be sorted in a list according to a descending order of importance. Thus, it is possible to obtain a summary of any desired length by going down the list in the sorted order, including segments until a time length requirement is met.

### Recording System Structure

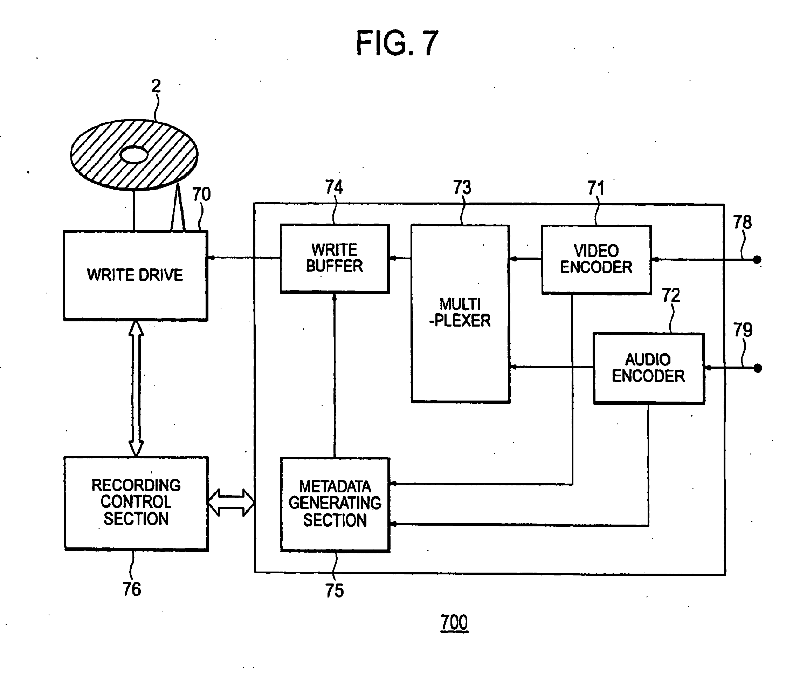

Figure 7 shows a block diagram of a system 700 for recording compressed multimedia files and metadata files on storage media 2, such as a disc or tape. The system includes a video encoder 71 and an audio encoder 72, which take as input video signals 78, audio signals 79, text, images, binary data, and the like. The outputs of the encoder are multiplexed by the multiplexer 73 and stored temporarily in a write buffer 74 as multimedia data. The outputs are also passed to a metadata generating section 75 which also writes output to the write buffer.

A write drive 70 then writes the multimedia and the metadata to the storage media 2 as files under control of a recording control section 76, which includes a processor. The files can be written in a compressed format using standard multimedia compression techniques such as MPEG and AC-3. Encryption can also be used during the recording. Note that the metadata generating section 75 can be implemented as software incorporated in recording control section 76.

The encoders extract features from the input signals 78-79, e.g., motion vectors, a color histograms, audio frequencies, characteristics, and volumes, and speech related information. The extracted features are analyzed by the metadata generating section 75 to determine segments and their associated index information and importance levels.

### Windowed Importance Level

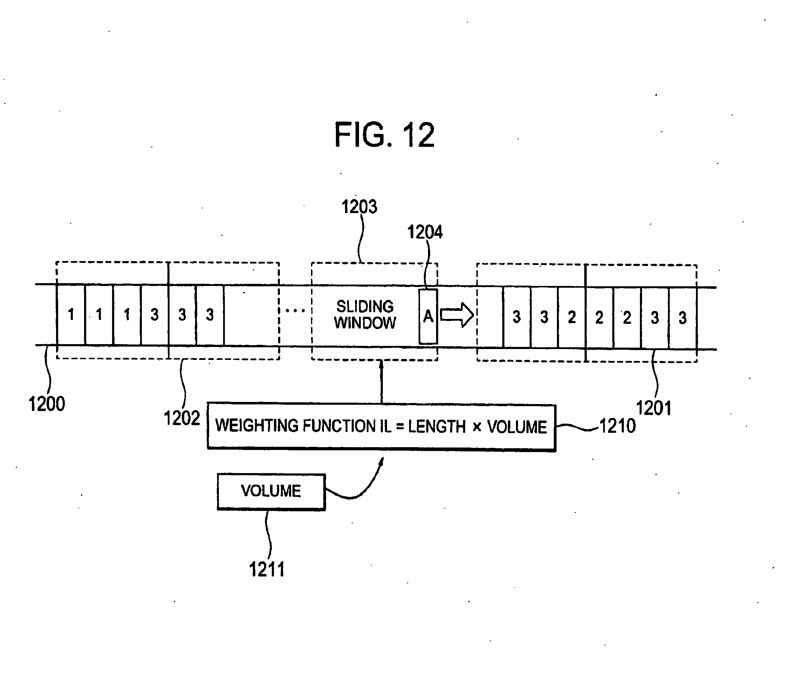

For example, as shown in Figure 12, the importance levels can be determined by using the audio signal. For example, the audio volume for each segment 1201 can be used, and furthermore, the audio signal for each segment can be classified into various classes, such as speech, music, cheering, applause, laughter etc. in this case, the entire content 1200 is partitioned into non-overlapping segments 1201, e.g., 1 second duration. Applause and cheering can be given a higher importance level than speech and music.

After segments 1201 are classified, a possible way to locate highlights is to partition the content into equal duration segments 1201, or windows 1202. If windows are used, each window contains multiple classified segments as shown.

Next, the importance level of each window can be computed by finding a maximum length of uninterrupted or continuous applause and/or cheering in the window, or by finding a percentage of applause and/or cheering in the window. All the segments in the window can be given the importance level of the window.

Another windowing scheme uses a fixed duration sliding window 1203 over the entire content, e.g., 12 seconds. The sliding window includes an 'anchor' segment, for example, the, first, middle, or last segment in the window. The window can slide forward one segment at the time. Then, the importance of the anchor segment (A) 1204 of the window is based on the percentage of applause and/or cheering or length of contiguous applause and/or cheering in the entire sliding window. The sliding window approach enables more precise temporal location of highlights.

### Weighted Importance Level

Furthermore, the importance (IL) obtained through the above strategies can be further weighted (1210) by a factor, e.g., the audio volume, 1211, of the window to get the final importance level. Thus, for instance, if a segment contains a lot of low volume applause, then the segment receives a relatively low importance level, whereas a segment with very loud applause receives a relatively high importance level.

Note that regarding a sports program etc., screaming of an announcer or commentator is involved in addition to applause, cheers, etc. at the time of scoring or at a scoring chance in many cases. Therefore, as for the sports program etc., the screaming sound including the applause and cheers is set as one sound class and used for calculation of an importance level as one effective technique.

Note that, for any implementation, the multimedia files and the metadata files do not need to be generated concurrently. For example, the metadata can be generated at later tone, and metadata can be added incrementally over time.

### Time Threshold Based Reproduction

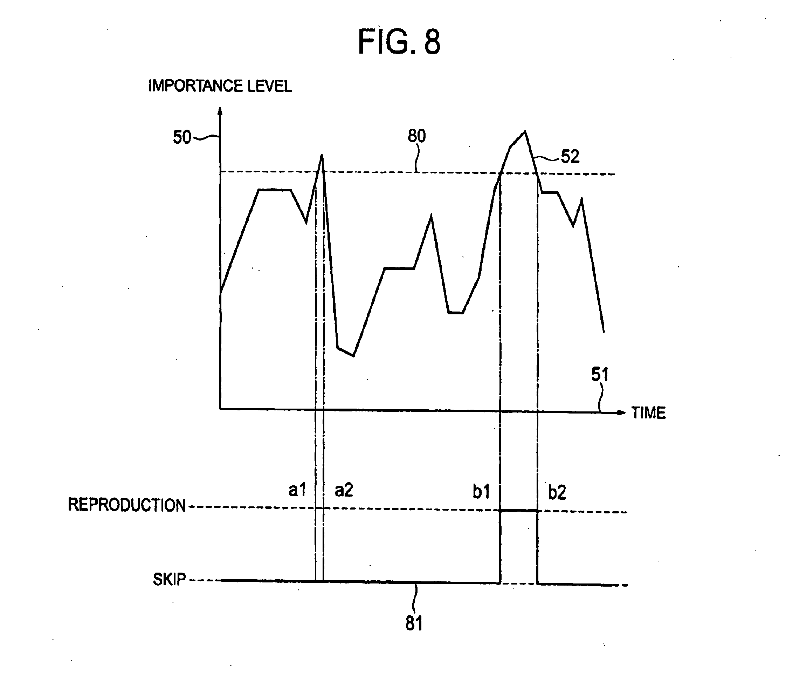

Figure 8 shows an alternative reproduction according to an embodiment of the invention in an abstract manner where the vertical axis 50 defines an importance level, the horizontal axis 51 defines time, and the continuous curve 52 indicates importance levels over time. Line 80 is a variable importance level threshold, and line 81 a reproduction for only those segments that have a particular importance greater than the threshold. Other segments are skipped.

However, in this embodiment, a time threshold is also used. Only segments that have a particular importance level greater than the importance level threshold and maintain that importance level for an amount of time that is longer than the time threshold are reproduced. For example, the segment a1 to a2 is not reproduced, while the segment b1 to b2 is reproduced. This eliminates segments that are too short in time to enable the viewer to adequately comprehend the segment.

### Time Threshold Based Reproduction with Additive Segment Extension

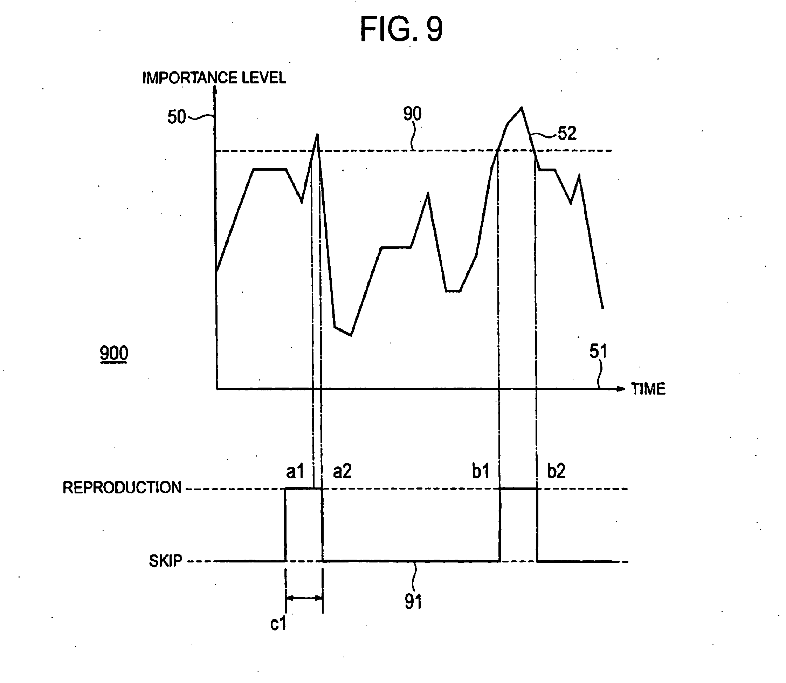

Figure 9 shows an alternative reproduction 900 according to an embodiment of the invention in an abstract manner where the vertical axis 50 defines an importance level, the horizontal axis 51 defines time, and the curve 52 indicates importance levels over time. Line 90 is an importance level threshold, and line 91 a reproduction for only those segments that have a particular importance greater than the threshold. Other segments are skipped, as before. In this implementation, as well as alternative implementations described below, the amount of extension can vary depending on the decisions made by the reproduction control section.

This embodiment also uses the time threshold as described above. However, in this case, segments that are shorter in time than the time threshold are not skipped. Instead, such segments are time extend to satisfy the time threshold requirement. This is done by adding portions of the multimedia file before, after, or before and after, the short segments, for example, segment c1 to a2. Thus, the short segments are increase in size to enable the viewer to adequately comprehend the short segment. It should be noted, that a second time threshold can also be used, so that extremely short segments, e.g., single frames, are still skipped.

### Time Threshold Based Reproduction with Multiplicative Segment Extension

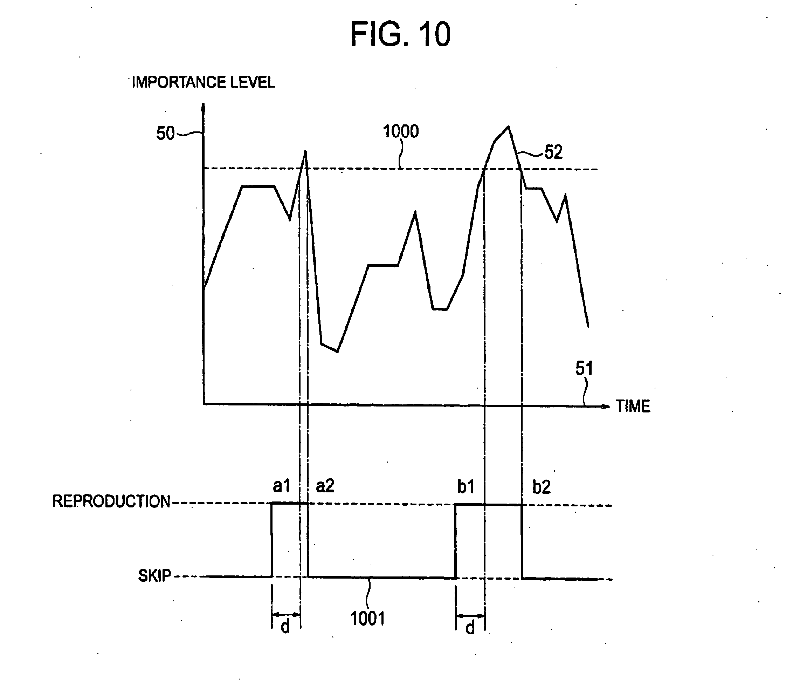

Figure 10 shows an alternative reproduction according to an embodiment of the invention in an abstract manner where the vertical axis 50 defines an importance level, the horizontal axis 51 defines time, and the curve 52 indicates importance levels over time. Line 1000 is an importance level threshold, and line 1001 a reproduction for only those segments that have a particular importance greater than the threshold. Other segments are skipped.

This embodiment also uses the time threshold as described above. However, in this case, the time of the segments are increased by a predetermined amount d to increase the size of the reproduced segments that satisfy the time threshold. As above, the segments can be extended before, after, or before and after. We can also use a multiplication factor to achieve the same lengthening of the time of the segments.

### Recording and Reproducing System Structure

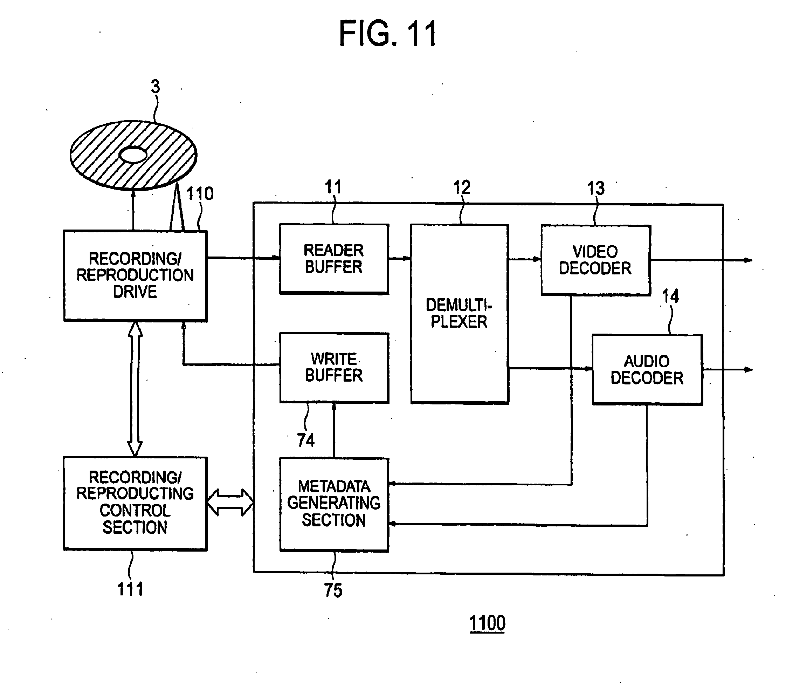

Figure 11 shows a block diagram of a system 1100 for recording and reproducing compressed multimedia files and metadata files stored on read/write storage media 3, such as a disc or tape.

A read/write drive 110 can write data to the read buffer 11 and read data from the write buffer 74. The demultiplexer 12 acquires, sequentially, multimedia from the read buffer, and separates the multimedia into a video stream and an audio stream. The video decoder 13 processes the video stream, and the audio decoder 14 processes the audio stream. However, in this case, the metadata generating section 75 also receives the outputs of the decoders 13-14 so that the reproduced multimedia can be stored on the storage media 3 using a recording/reproducing control section 111.

Note that the importance level, indexing information and other metadata can also be extracted from the video and/or audio data during the decoding phase using the metadata generating section 75.

Furthermore, the importance level, indexing information and other metadata can also be generated manually and inserted at a later stage.

Note that any of the above implementations can include a search function, to enable the viewer to directly position to particular portion of the multimedia based either on time, frame number, or importance. The search function can use thumbnail' segments, for example a single or small number of frames to assist the viewer during the searching.

Note that in Embodiment 1, the description is given of the case where the system includes the recording medium. However, the recording medium may be configured independently of the system. For example, in the case of incorporating an HDD (Hard Disc Drive) in the system as the recording medium, the system and the recording medium are configured such that the recording medium is built in the system. On the other hand, in the case of using as the recording medium an external optical disc or magnetic disc such as an HDD or DVD, the system and the recording medium are separately configured.

### Embodiment 2.

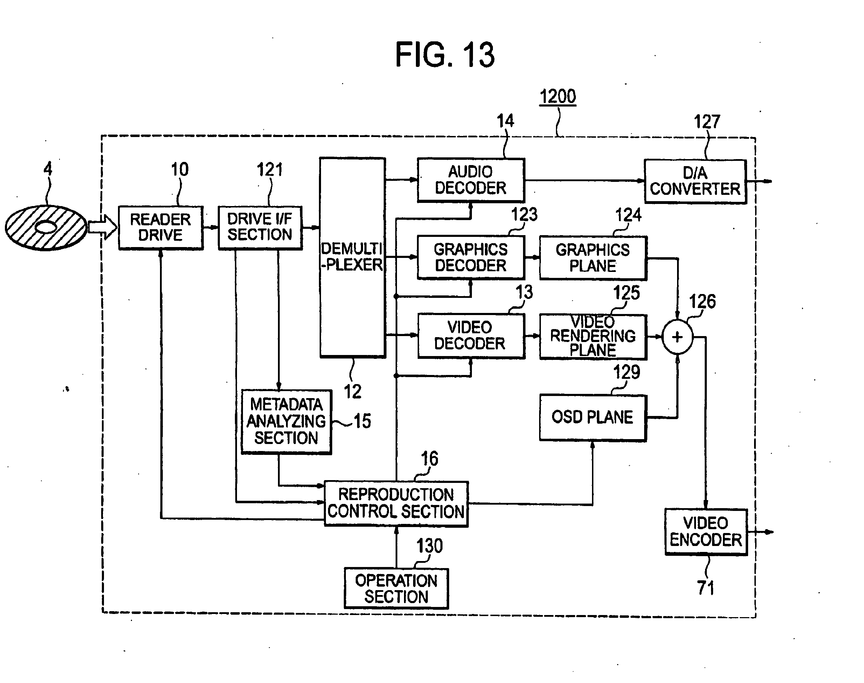

Figure 13 is a block diagram showing a structure of an apparatus for browsing video 1200 according to Embodiment 2. Note that in Figure 13, the same components as those in Embodiment 1 are denoted by the same reference numerals.

The apparatus for browsing video 1200 reproduces image and sound in the video recorded according to the directory structure shown in Figure 2 on the recording medium 4 selected from various DVD discs including a DVD-R and DVD-RW, a hard disc, and Blu-ray Disc. Also, the apparatus for browsing video 1200 allows browsing of the video according to the importance level corresponding to the video recorded on the recording medium 4.

Hereinafter, description will be given of a case where the apparatus for browsing video 1200 allows browsing of the video. A user operates the operation section 130 to select a desired video to be reproduced, and further selects an operation for browsing video. When the user selects the desired video, as explained above with reference to Figure 4, the program 41 constituting the video and the cell 42 constituting the program 41 can be identified by using the program chain information 40. Hence, a VOB number as a reference target, and the presentation time (PTM) of each of the reproduction start time and reproduction end time of the cell are determined.

The metadata 30 (Figure 3) recorded on the recording medium 4 is read out by the reader drive 11 during a period from when the recording medium 4 is inserted to the reader driver 11 until when the user selects the operation for browsing video, or after the user selects a video to be browsed, or halfway through the reproduction (normal reproduction) of a program recorded on the recording medium 4 in the apparatus for browsing video 1200, and outputted to the drive I/F section 3. The drive I/F section 3 demodulates the inputted metadata 30 and outputs the resultant data to the metadata analyzing section 15.

The metadata analyzing section 15 refers to, as mentioned above, the VOB number corresponding to the video detected according to the program chain information 40, and reads the metadata 30 corresponding to the video from the metadata file 26. Then, the metadata analyzing section 15 reads the importance level corresponding to each VOB stored in a video shot importance level 34c from the metadata 30.

To be specific, first of all, the VOB number is referred to, and then the metadata management information 31a and the address information stored in the VOB metadata information search pointer 31b are used to identify the VOB metadata information 31c. Next, the video shot map information 32b corresponding to the VOB metadata information 31c is accessed.

Following this, the start time information stored in the video shot start time information 34a descried in each video shot entry 33b in the video shot map information 32b, the end time information stored in the video shot end time information 34b, and the importance level stored in the video shot importance level 34c are read out. Note that the video shot start time information 34a and the video shot end time information 34b are identified, which identifies the video shot with the presentation time (PTM) within the period from the reproduction start time of the cell to the reproduction end time thereof.

The importance level read out in the metadata analyzing section 15 is recorded in the metadata analyzing section 15. Note that the metadata analyzing section 15 may record all importance levels corresponding to the plural videos recorded on the recording medium 4 or all importance levels corresponding to the video to be browsed out of the videos recorded on the recording medium 4. Alternatively, it is possible to record only importance levels necessary for generating an OSD plane image (described in detail later) in the reproduction control section 16. Also, the importance level may be recorded on a memory (not shown) provided in the reproduction control section 16, for example, instead of recording the level in the metadata analyzing section 15. In this case, the metadata analyzing section 15 reads the importance level from the video shot importance level 34c in the metadata 30 and outputs the obtained one to the reproduction control section 16.

The reproduction control section 16 compares the importance levels recorded in the metadata analyzing section 15 with the preset threshold. To elaborate, a comparator (not shown) provided to the reproduction control section 16 compares the importance level outputted from the metadata analyzing section 15 with the threshold. Then, the reproduction control section 14 identifies the VOBU constituting the video shot corresponding to the importance level higher than the threshold by using the program chain information 40 as explained above with reference to Figure 4, and controls the reader drive 11 so as to read out the VOBU. Note that the threshold can be adjusted by the user operating the operation section 130.

Note that the VOBU read out by the reader drive 11 is demodulated by the drive I/F section 121. Then, the data (sound data) corresponding to the sound equivalent to the VOBU is outputted to the D/A converter 127 through the audio decoder 14. In addition, the data (sub-image data) corresponding to a sub-image (caption etc. in the video) equivalent to the VOBU is accumulated in a graphics plane as YUV signals after processed in the graphics decoder 123. Further, the data (video data) corresponding to the video image is accumulated to the video rendering plane 125 as analog video signals after processed in the video decoder 13.

The reproduction control section 16 makes comparison in the aforementioned manner, and generates an image (OSD plane image) indicating a change in importance level of the video selected by the user. Then, it outputs the signal (hereinafter, referred to as OSD signal) corresponding to the OSD plane image to the OSD plane 129 configured of a frame memory etc. After that, the OSD plane images corresponding to the OSD signals are accumulated to the OSD plane 129.

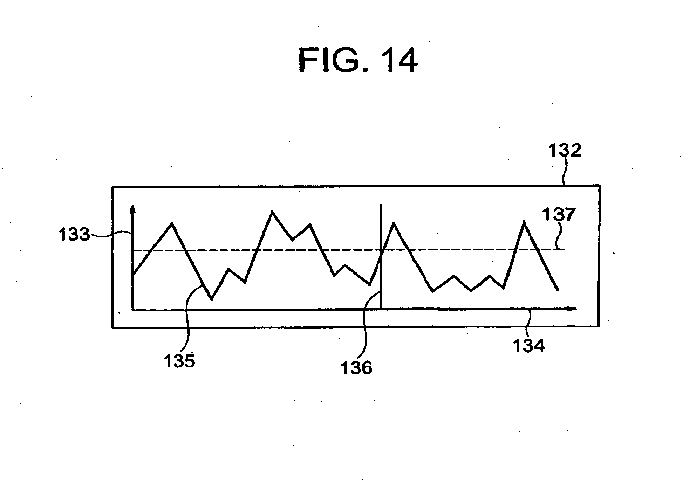

Figure 14 is an explanatory view of an OSD plane image. As shown in Figure 14, the reproduction control section 16 generates an OSD plane image 132 including an importance level plot 135 indicative of a change in importance level in the time axis direction with a vertical axis 133 representing an importance level and a horizontal axis 134 representing the time axis, a slice level 137 indicative of a threshold preset in the comparator, and a reproduction indicator 136 indicative of a position in the entire video program reproduced when the apparatus for browsing video 1200 allows browsing of video. Note that the reproduction indicator 136 is appropriately updated and rendered so as to correctly indicate a position of the image output from the video rendering plane 125 in the entire program on the time axis 134.

The signals accumulated in the video rendering plane 125, the graphics plane 124, and the OSD plane 129 are outputted to the synthesis section 126 in synchronism with each other. The synthesis section 126 synthesizes the YUV signals accumulated in the graphics plane 124, the analog video signals accumulated in the video rendering plane 125, and the OSD signals accumulated in the OSD plane 129 and outputs the synthesized signal to the video encoder 71. Then, the video encoder 71 converts the synthesized signal to a predetermined signal and outputs the converted signal to an external device such as a display device connected to the apparatus for browsing video 1200.

Note that the operation for browsing the video, which is carried out in the apparatus for browsing video 1200, is similar to that described above with reference to Figure 5.

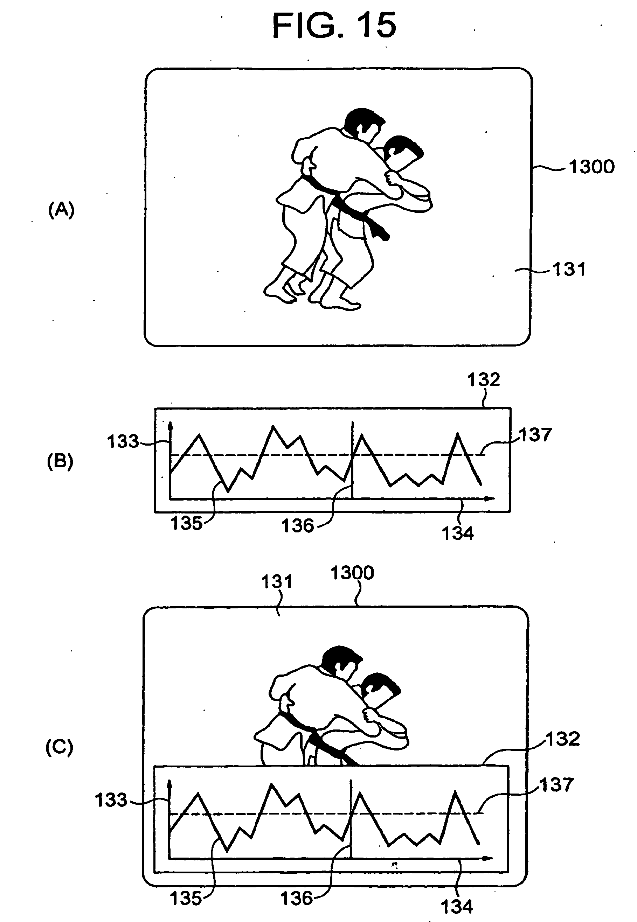

Figure 15 is an explanatory view of the video to be displayed on the display device 1300 such as a monitor or television connected to the apparatus for browsing video 1200 when the apparatus for browsing video 1200 allows browsing of the video. In Figure 15, Figurer 15(A) schematically shows an image 131 (hereinafter, also referred to as video plane image 131) corresponding to the analog video signal outputted from the video rendering plane 125. Further, Figure 15(B) shows the OSD plane image 132 explained with reference to Figure 14. Furthermore, Figure 15(C) shows a synthetic image of the image of Figure 15 (A) and the image of Figure 15(B), that is, an image corresponding to the synthesized signal outputted from the synthesis section 126 (hereinafter, referred to as synthetic image). Note that if there is an image corresponding to the sub-image data such as the caption, the image corresponding to the sub-image data is superimposed on the synthetic image.

As shown in Figure 15(C), in the apparatus for browsing video 1200 according to Embodiment 2, the synthetic image is displayed on the display device 1300 upon browsing the video. Thus, unlike any conventional apparatus for browsing video, such a problem that a user cannot grasp how the excitement grows throughout the video is eliminated. In other words, if glancing at the OSD plane image 132 in the synthetic image, the user can grasp how the excitement grows throughout the video.

To detail the above, for example, it is assumed that the video to be browsed is a video of a sports program, and a parameter indicative of a feature of the sports program is set as "cheering duration". Under the above assumption, when the importance level is calculated, the importance level plot 135 represents a change in cheering duration of the sports program. Regarding the sports program etc., cheers and applause continue over a longer time in a scene more important to determine which one wins or loses the game. Therefore, the user can grasp a position of the important scene in the entire sports program by merely glancing at the importance level plot 135 and thus can grasp at a glance how the excitement grows over the sports program.

In addition, the user checks a position of the slice level with respect to the importance level plot 135, and thus can grasp at a glance how far the entire video is summarized through browsing the video. Then, when aiming to reproduce the video in a more summarized form, the user operates the operation section 130 to move the slice level 137 upward along the vertical axis 133. Meanwhile, when aiming to view more video images in the video, the user moves the slice level 137 in a direction opposite to the upward direction of the vertical axis 133. Note that the reproduction control section 16 refers to the program chain information 40 to adjust the video shot to be reproduced according to the change in threshold, and controls the reader drive 10 so as to read the VOBU in the video shot.

As discussed above, with the apparatus for browsing video 1200 according to Embodiment 2, even when viewing a video recorded on the recording medium 4 for the first time, the user can easily grasp how the excitement grows over the video.

Further, the OSD plane image 132 is referred to, whereby a viewer can detect his/her desired scene (high-point scene etc.) quickly. Then, the video browsing time can be adjusted with ease merely by operating the operation section 130 to control the threshold while viewing the OSD plane image 132.

In addition, it is possible to readily grasp a position of an image to be displayed through browsing video in the entire video by using the reproduction indicator 136.

Moreover, unlike the conventional apparatus for browsing video, a position of the high-point scene etc. can be readily grasped without fast-forwarding the entire video to check the position. In other words, for example, in the case where a program recorded on a recording medium lasts for a long period, it takes considerable time for a user to view the entire video, even though the video is fast-forwarded. However, with the apparatus for browsing video according to Embodiment 2, a position of the high-point scene in the entire video can be grasped at a glance irrespective of whether the program is long or short.

Moreover, in the case of setting (stamping) the high-point scene as in the conventional apparatus for browsing video, there is a possibility that the high-point scene is skipped out. However, the apparatus for browsing video 1200 according to Embodiment 2 does not involve such a possibility.

Note that the importance level plot 135 in the OSD plane image 132, the slice level 137, the reproduction indicator 136, and other such elements in the OSD plane image, or the entire OSD plane image 132 may be made switchable between displayed and hidden by the user operating the operation section 130.

### Embodiment 3.

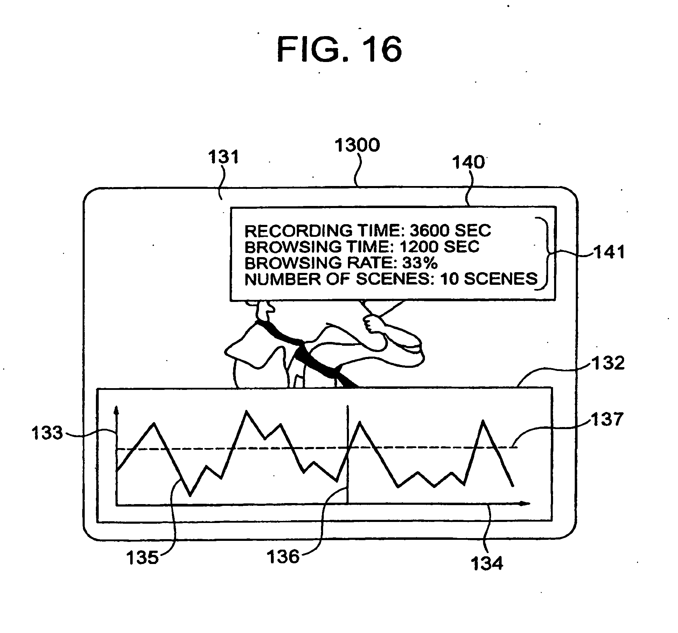

Figure 16 is an explanatory view of an image displayed when an apparatus for browsing video according to Embodiment 3 allows browsing of the video. Note that, in the following description, the same components as those of Embodiment 1 or 2 are denoted by the same reference numerals and their detailed description is omitted.

As shown in Figure 16, in the apparatus for browsing video according to Embodiment 3, a calculation section (not shown) provided to the reproduction control section 16 calculates the recording time of the video to be browsed (that is, the time necessary for normal reproduction of the video) and the time necessary for browsing the video according to a current threshold (hereinafter, referred to as browsing time). The reproduction control section 16 also calculates the browsing rate by dividing the browsing time by the recording time, and counts the number of scenes to be reproduced through browsing the video.

The reproduction control section 16 generates the OSD plane image 140 including the text information 141 based on a result of the calculation etc. carried out in the reproduction control section 16, and outputs the OSD signal corresponding to the OSD plane image 140 to the OSD plane 129. Then, the OSD plane 129 outputs the OSD signal to the synthesis section 126 in synchronism with the signals etc. accumulated to the video rendering plane.

In the synthesis section 126, in addition to the signals synthesized in Embodiment 2, the OSD signals corresponding to the OSD plane image are synthesized. As a result, the display device 1300 displays, as shown in Figure 16, the OSD plane image including the text information 141 aside from the OSD plane image including the importance level plot 135 as described in Embodiment 2.

As mentioned above, with the apparatus for browsing video according to Embodiment 3, the text information 141 is displayed in addition to the importance level plot 135 as described in Embodiment 2, so the user can easily grasp the time necessary for browsing video, the browsing rate, etc.

Therefore, the user refers to the text information displayed on the display device 1300 and operates the operation section 130, thereby adjusting the threshold.

Note that, in Embodiment 3, the description is given of the case where the browsing time or the like is displayed as the text information. However, it is possible to display any supplementary/additional information to be provided to the user, such as the number assigned to a scene currently reproduced, the name of a program currently reproduced, the name of a performer, the name of a producer, recording date and time, or day of the week, the name of the broadcast station having broadcast the program that the user recorded, the total number of programs recorded on the recording medium 4, the number assigned to currently reproduced program and reproduction time position thereof, and the name of the recording medium 4.

In addition, the supplementary/additional information to be displayed as the text information 141 may be displayed by means of an icon or image aside from a character string or other such text forms.

Further, the OSD plane images 132 and 140 may be independently set to allow ON/OFF-control in response to the user's operation of the operation section 130. Note that the OSD plane images 132 and 140 can be both set displayed or not displayed at the same time, or can be partly set displayed or not displayed, for example, in such a way that the threshold 137 alone is subjected to ON/OFF control of display.

### Embodiment 4.

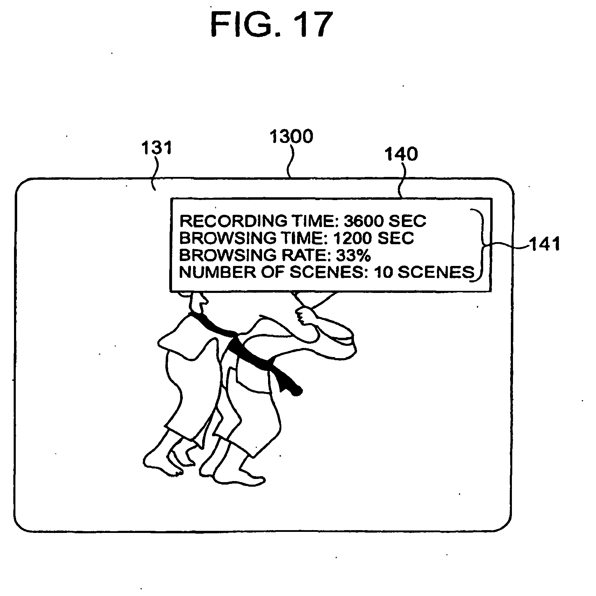

Figure 17 is an explanatory view of an image displayed when an apparatus for browsing video according to Embodiment 4 allows browsing of the video. Note that, in the following description, the same components as those of Embodiments 1 to 3 are denoted by the same reference numerals and their detailed description is omitted.

The OSD plane 129 in the apparatus for browsing video according to Embodiment 4 accumulates only the OSD signals corresponding to the text information 141 described in Embodiment 3 and outputs the OSD signals to the synthesis section 126. Therefore, the display device 1300 displays, as shown in Figure 17, the text information 141 and the video image to be browsed. Note that contents of the text information 141 are the same as those of Embodiment 3 and their detailed description is omitted.

As mentioned above, with the apparatus for browsing video according to Embodiment 4, the text information 141 is displayed, so the user can easily grasp the time necessary for browsing the video, the browsing rate, etc.

### Embodiment 5.

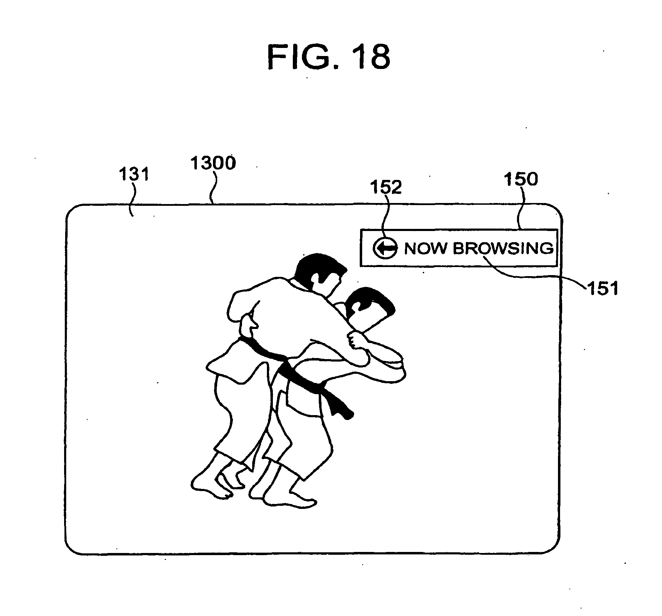

Figure 18 is an explanatory view of an image displayed when the apparatus for browsing video according to Embodiment 5 allows browsing of the video. Note that in the following description, the same components as those of Embodiments 1 to 4 are denoted by the same reference numerals and their detailed description is omitted.

The apparatus for browsing video according to Embodiment 5 generates an OSD plane image 150 including an operation mode display text 151 and an icon image 152 that are previously recorded in a reproduction control section 16, in the reproducing control section 16.

To be specific, when the operation for browsing video is selected in the apparatus for browsing video, the reproduction control section 16 generates the OSD plane image 150 according to the prerecorded operation mode display text 151 and icon image 152, and outputs the OSD signal corresponding to the OSD plane image to the OSD plane 129. Then, the OSD plane 129 accumulates the OSD signals outputted from the reproduction control section 16 and outputs the OSD signals to the synthesis section 126.

Then, the synthesis section 126 synthesizes an image corresponding to the signal outputted from the video rendering plane 125 and an image corresponding to the signal outputted from the graphics plane 124 with an image corresponding to the signal outputted from the OSD plane 129, and outputs the synthetic image to the video encoder 71. As a result, the display device 1300 displays the image as shown in Figure 18.

As described above, with the apparatus for browsing video according to Embodiment 5, the user can grasp at a glance the operation state of the apparatus for browsing video.

Note that in Embodiment 5, the description is given of the operation mode display text 151, and the icon image 152 which are displayed upon browsing the video; however, it is possible to display the operation mode display text 151 and icon image 152 indicative of normal reproduction, fast-forward, fast-rewind, and other such operation states.

Alternatively, instead of displaying both the operation mode display text 151 and the icon image 152, one of the operation mode display text 151 and the icon image 152 may be displayed. Further, the operation state can be switched between the case of operating the operation section 130 to display both the operation mode display text 151 and the icon image 151, the case of displaying one of the operation mode display text 151 and icon image 152, and the case of displaying neither the operation mode display text 151 nor the icon image 152.

### Embodiment 6.

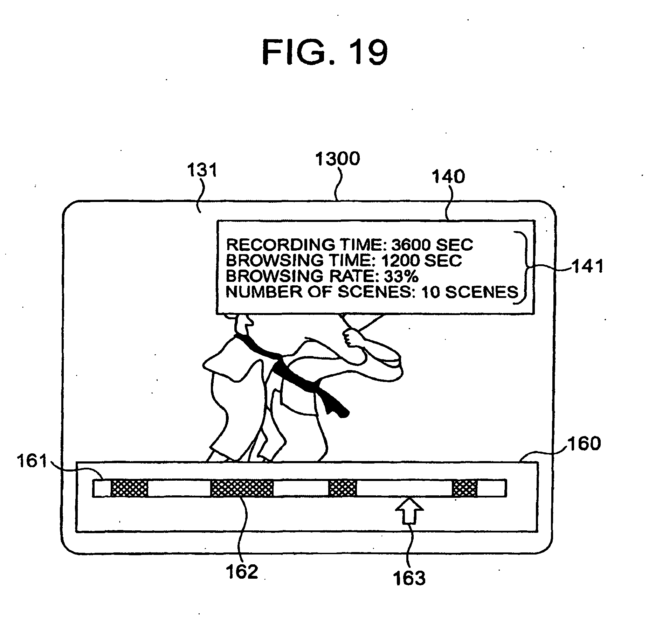

Figure 19 is an explanatory view of an image displayed when an apparatus for browsing video according to Embodiment 6 allows browsing of video. Note that, in the following description, the same components as those of Embodiments 1 to 5 are denoted by the same reference numerals and their detailed description is omitted.

The apparatus for browsing video according to Embodiment 6 generates the important scene indication bar 161 indicative of a position of a video (important scene) corresponding to the importance level higher than the currently set threshold 137, the important scene bar 162 indicative of a position of the important scene, and the reproduction indicator 163 indicative of the current reproducing position which is appropriately updated, in the reproduction control section 16. Then, the reproduction control section 16 generates the OSD plane image 160 and outputs the OSD signal to the OSD plane 129. Thereafter, the OSD plane 129 accumulates the OSD signals outputted from the reproduction control section 16 and outputs the OSD signals to the synthesis section 126.

The synthesis section 126 synthesizes an image corresponding to the signal outputted from the video rendering plane 125 and an image corresponding to the signal outputted from the graphics plane 9 with an image corresponding to the signal outputted from the OSD plane 129, and outputs the synthetic image to the video encoder 71. As a result, the display device 1300 displays the image as shown in Figure 19.

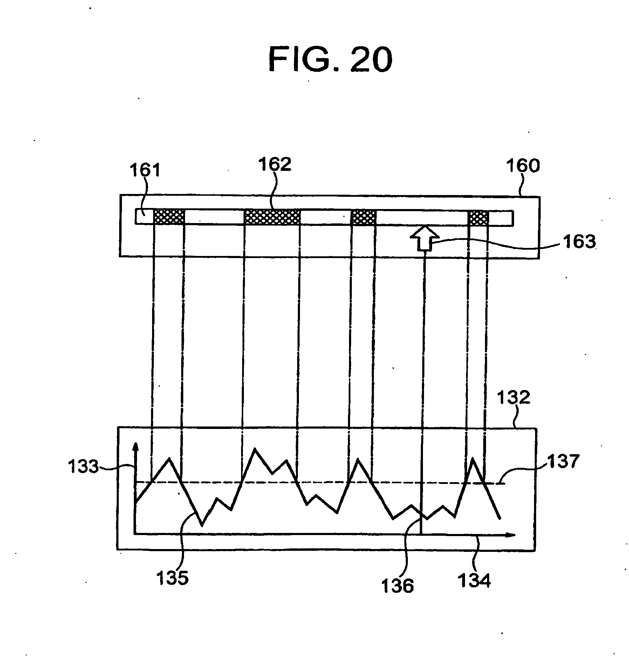

Here, detailed description is given of how to create the important scene indication bar 161. Figure 20 is an explanatory view of how to create the important scene indication bar 161. Note that, in Figure 20, the same components as those of Figure 19 are denoted by the same reference numerals, and their detailed description is omitted.

For example, it is assumed that the importance level plot 135 as described in Embodiment 2 is present, and a portion exceeding the currently set threshold 137 corresponds to an important scene (for example, scoring scene or other such high-point scenes) . Under the above assumption, the important scene bar 162 can be obtained by projecting the portion exceeding the threshold 137 to the important scene indication bar 161.

As described above, with the apparatus for browsing video according to Embodiment 6, an area of the OSD plane image 160 including the important scene indication bar 161 can be made smaller than an area of the OSD plane image including the importance level plot 135 as described in Embodiment 2. Therefore, even if the OSD plane image 160 is superimposed on the video rendering plane image 131 for display, the video image is by no means out of sight.

Also, upon the normal reproduction, the on-screen important scene indication bar 161 allows the viewer to easily grasp the important scene portion (high-point scene with a high importance level) relative to the current reproducing position.

In addition, displaying the important scene bar 162 on the important scene indication bar 161 allows the viewer to easily grasp the browsing rate etc. rather than displaying the text information 141 alone.

### Embodiment 7.

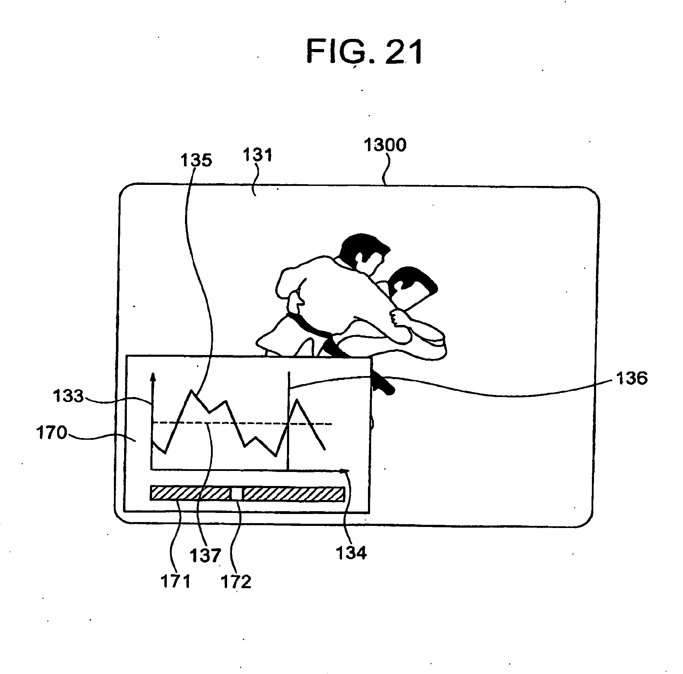

Figure 21 is an explanatory view of an image displayed when an apparatus for browsing video according to Embodiment 7 is used to browse video. Note that in the following description, the same components as those of Embodiments 1 to 6 are denoted by the same reference numerals, and their detailed description is omitted.

The apparatus for browsing video according to Embodiment 7 generates the OSD plane image including a sliding bar 171 indicative of the recording time of the video and a slide display indicator 172 indicative of a position of the currently displayed scene in the entire video, in the reproduction control section 16, and outputs the OSD signal corresponding to the OSD plane image to the OSD plane 129. The OSD plane 129 accumulates the OSD signals outputted from the reproduction control section 16, and outputs the OSD signals to the synthesis section 126. Note that the slide display indicator 172 is appropriately updated and rendered so as to correctly indicate a position of an image output from the video rendering plane 125 in the entire video on the sliding bar 171.

After that, the synthesis section 126 synthesizes an image corresponding to the signal outputted from the video rendering plane 125 and an image corresponding to the signal outputted from the graphics plane 124 with an image corresponding to the signal outputted from the OSD plane 129, and outputs the synthetic image to the video encoder 71. As a result, the display device 1300 displays an image as shown in Figure 21.

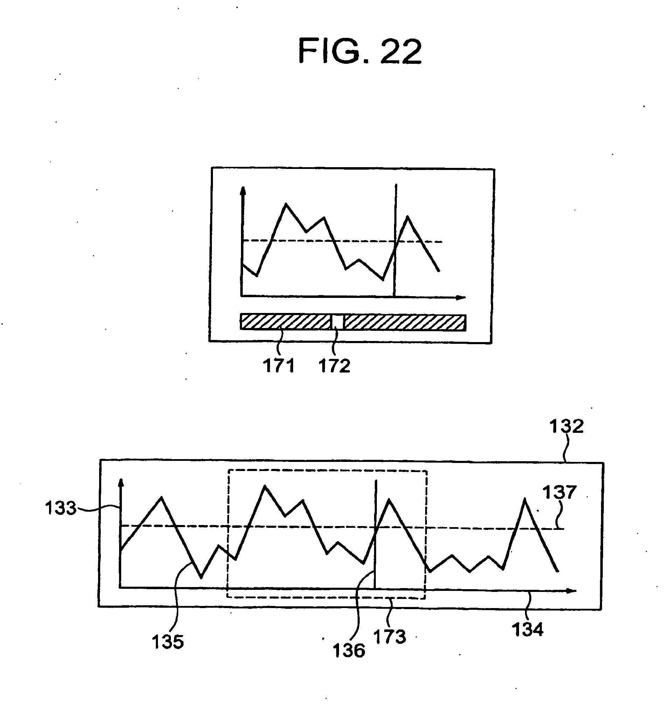

Here, the sliding bar 171 and the slide display indicator 172 are described in detail. Figure 22 is an explanatory view of the sliding bar 171 and the slide display indicator 172. Note that the same components as those of Figure 21 are denoted by the same reference numerals, and their detailed description is omitted.

For example, assuming that the OSD plane image 132 including the importance level plot 135 described in Embodiment 2 is displayed, the reproduction control section 16 outputs to the OSD plane 129 an OSD signal corresponding to a picked-up image equivalent to a portion of the importance level plot 135 surrounded by the dashed line (portion 173 in Figure 22; hereinafter referred to as partial plot 173). The reproduction control section 16 determines, through calculation, a position of the portion picked up as the partial plot 173 in the entire video, and updates the slide display indicator 172 so as to indicate the determined position as needed to be superimposed on the sliding bar 171.

With the above processing of the reproduction control section 16, the OSD plane image 170 shown in Figure 21 is generated.

As mentioned above, with the apparatus for browsing video according to Embodiment 7, an area of the OSD plane image 170 representing the change in importance level can be minimized, whereby the video image is by no means out of sight even if the video plane image 131 is superimposed thereon.

Also, enlarging a specific portion of the importance level plot makes it possible to indicate the change in importance level in the time axis direction more finely and accurately. Hence, the user can visually recognize even the minute change of the importance level plot 135 with ease.

Note that in Embodiment 7, the description is given of the case where the sliding bar 171 and the slide display indicator 172 are used to indicate the position of the image currently displayed on the display device 1300 in the entire video, but it is also possible to adopt any other forms insofar as they allow the indication of the position of the currently displayed image in the entire video, such as a text form, for example, by fraction or in percentage, or a rendered form different from the sliding bar 170, for example, a circle graph.

### Embodiment 8.

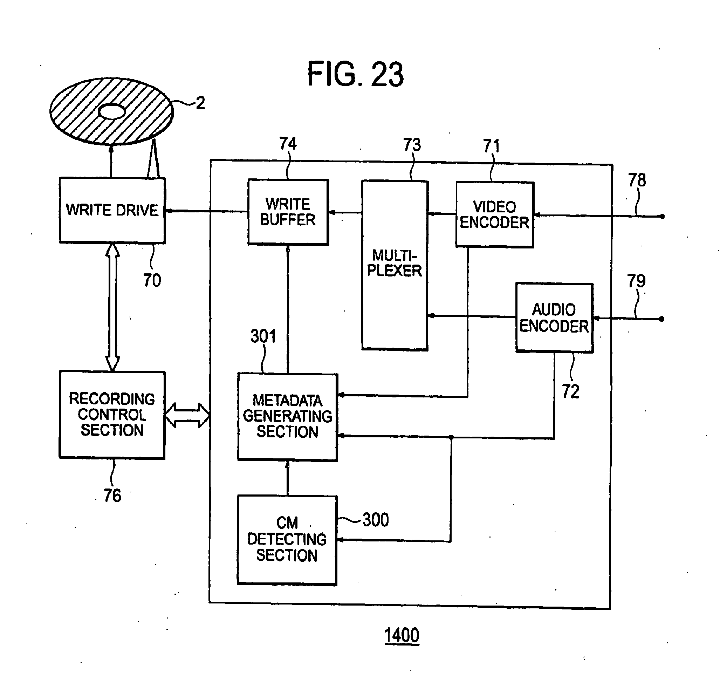

Figure 23 is a block diagram showing a structure of the recorder 1400 according to Embodiment 8. Note that, in the following description, the same components as those of Embodiment 1 or 2 are denoted by the same reference numerals, and their detailed description is omitted.

In Figure 23, the CM detecting section 300 analyzes a feature of an audio signal extracted by the audio encoder 72 and detects a commercial message (hereinafter also referred to as CM) segment in the video. Then, the data corresponding to the detection result is outputted to the metadata generating section 301.

The metadata generating section 301 calculates, as mentioned in Embodiment 1, the importance level based on the feature of the video signal or audio signal extracted by each encoder. Further, the metadata generating section 301 modifies the importance level in the generated metadata according to the result of CM detection in the CM detecting section 300. Also, the metadata generating section 301 generates the metadata including the modified importance level and outputs the generated metadata to the write buffer 74. Thereafter, the metadata is recorded on the recording medium 2 in association with the segment as mentioned in Embodiment 1.

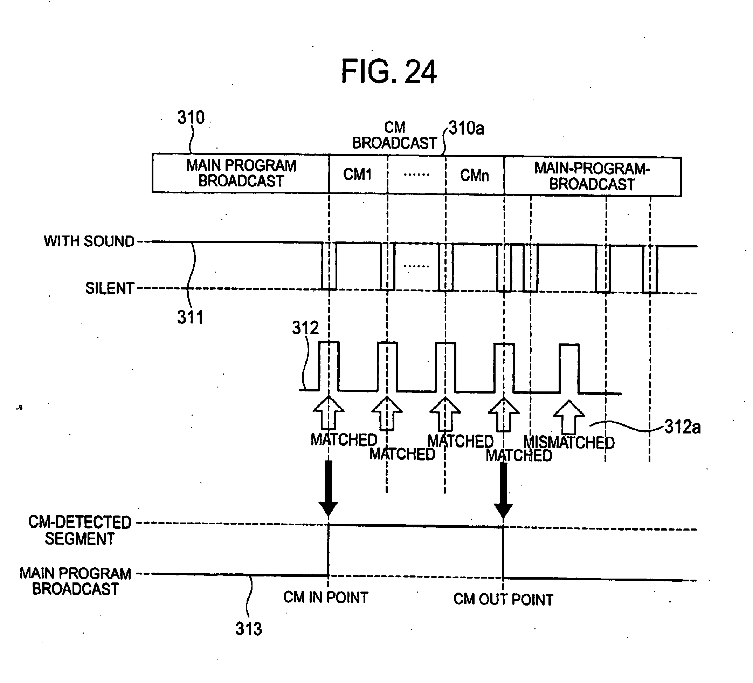

Figure 24 is an explanatory view of CM detection in the CM detecting section 300. In Figure 24, reference numeral 310 corresponds to a conceptual view that shows the video contents corresponding to the video signal or audio signal inputted to the recorder 1400 (e.g., broadcast contents of the TV broadcast) in the form of being divided into a main program broadcast (hereinafter also referred to as main program) and a CM broadcast (hereinafter also referred to as CM). Note that the video contents conceptual view shows a case where the CM broadcast includes plural CMs like CM1,..., CMn.

In addition, in Figure 24, denoted by 311 is a silent portion detection chart representing a portion with no sound (hereinafter also referred to as silent portion) and a portion with sound in the video contents shown in the video contents conceptual view 310, which are detected by analyzing the audio signal in the CM detecting section 300. Further, reference numeral 312 denotes a CM detecting filter for detecting a CM based on the silent portion, and reference numeral 313 denotes a CM detection chart representing a portion detected by the CM detecting filter 312 as a CM segment.

In general, as shown in the video contents conceptual view 310 of Figure 24, in the case where the video contents include the main program and CM, the video or sound in the main program is more likely to have no relation to the video or sound of the CM. Also, with the plural continuous CMs, the video or sound of one of the CMs is more likely to have no relation to the video or sound of another. Therefore, in border portions where a main program is switched to a CM, where CMs are switched from one to another, and where a CM is switched to a main program, a silent state continues for several hundred milliseconds. To that end, the CM detecting section 300 according to Embodiment 8 analyzes a feature of the sound outputted from the audio encoder 72, and detects the silent portion, thereby detecting a CM.

Hereinafter, an operation of the CM detecting section 300 will be described. As mentioned above, the CM detecting section 300 analyzes the feature of the sound outputted form the audio encoder 72, and detects the silent portion. As a method of detecting the silent portion, for example, it is possible to use a modified discrete cosine transformer (hereinafter also referred to as MDCT).

In the case of using the MDCT, the CM detecting section 300 subjects analog audio signals to A/D conversion in the audio encoder 72, and further subjects digital signals obtained through code compression (hereinafter also referred to as PCM (pulse code modulation) signals) to the MDCT to thereby calculate an MDCT coefficient. Next, the sum of squares of a value of a predetermined number of MDCT coefficients (that is, corresponding to an audio energy) is calculated and compared with a predetermined threshold. As a result of the comparison, if a segment where the sum of squares is not larger than the predetermined threshold corresponds to a segment that has predetermined duration (for example, several hundred milliseconds), the segment is set as the silent portion. As a result, in the case of the video shown in the video contents conceptual view 310 of Figure 24, the silent portion is detected at the border portions where the main program and the CM are switched and where the CMs are switched.

Note that information indicating the silent portion detected by the CM detecting section 300 (e.g., information indicating a position of the silent portion in the video on the time axis) is recorded on a memory (not shown) of the CM detecting section 300 or a memory (not shown) in the recording control section 76. Further, the predetermined threshold and the segment that has predetermined duration can be arbitrarily set according to a design etc. of the recorder 1400.

Subsequently, the CM detecting section 300 compares the detected silent portion with the CM detecting filter 312 to detect the CM segment. In general, the CM broadcast is performed while setting a time period for one CM to any of preset time periods like 15 seconds, 30 seconds, 60 seconds, 90 seconds,.... To that end, set in the CM detecting section 300 is the CM detecting filter 312 which generates enable signals at predetermined intervals, for example, an interval of 15 seconds or 30 seconds. Then, the generation position of the silent portion recorded on the memory (position on the time axis) is compared with the generation position of the enable signal (position on the time axis) to detect the CM.

More specifically, the CM detecting section 300 generates, when detecting a given silent portion, an enable signal (hereinafter also referred to as start enable signal) with the silent portion used as a starting point. When positions of enable signals generated at the predetermined intervals (e.g., an interval of 15 seconds or 30 seconds) following the start enable signal match positions of subsequent respective silent portions in succession, the silent portion used as the starting point is set as a start position of the CM segment (hereinafter also referred to as CM-IN point).

Next, when a portion where the position of the silent portion does not match the position of the enable signal is detected, the latest portion before the portion where the positions do not match each other, in which the position of the silent portion matches the position of the enable signal, is set as an end portion of the CM segment (hereinafter also referred to as CM-OUT point). Then, a segment between the CM-IN point and the CM-OUT point is set as a CM segment, and position information indicative of the CM segment is outputted to the metadata generating section 301. That is, a signal corresponding to the CM detection chart 313 is outputted to the metadata generating section 300.

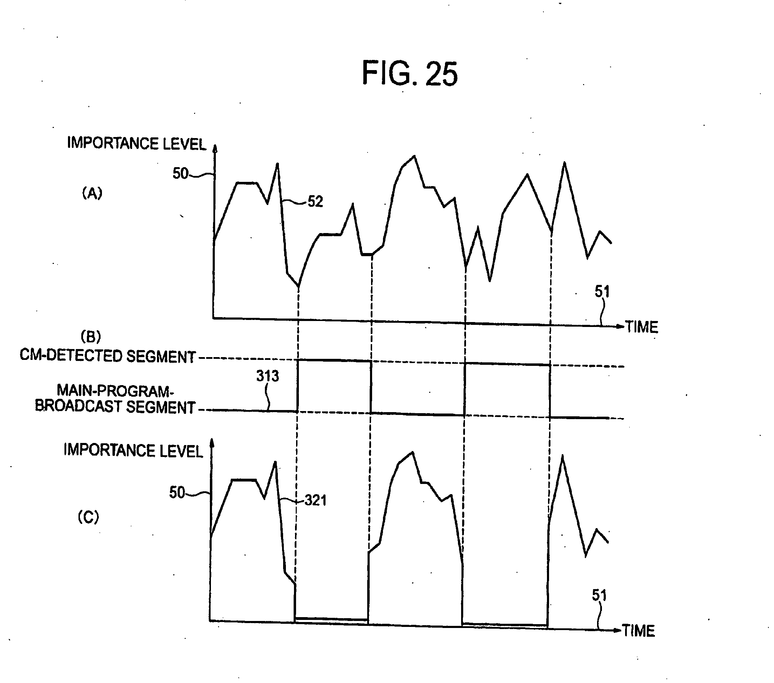

Figure 25 is an explanatory view of modification on an importance level in the metadata generating section 301. Also, Figure 25(A) shows an importance level plot (52 in the figure) indicative of a change example in importance level generated according to an output from the video encoder 71 or audio encoder 72 in the metadata generating section 301, Figure 25(B) shows the CM detection chart (313 in the figure), and Figure 25(C) shows an importance level plot (321 in the figure, hereinafter also referred to as modified importance level chart) obtained by modifying the importance level according to the CM detection chart.

The metadata generating section 301 compares the CM detection chart obtained in the CM detecting section 300 with the importance level plot to modify the importance level. In other words, in the importance level plot, an importance level matching the detected CM segment is set lower. More specifically, the importance level matching the detected CM segment is replaced by a fixed value such as 0, for example. Alternatively, the importance level matching the detected CM segment may be multiplexed by such a fixed value (e.g. 0.5) as to make the importance level lower. With the aforementioned processing, the modified importance level can be obtained in the metadata generating section 301.

Note that it is possible to perform the detection of the CM segment in the CM detecting section 300, the modification of the metadata in the metadata generating section 301, or recording of the metadata including the modified importance level on the recording medium, during an operation of recording the video on the recording medium 2 in the recorder 1400. Alternatively, after the video is recorded on the recording medium 2, the importance level may be modified according to the time information regarding the silent segment recorded on a memory, a hard disc, etc., and recorded on the recording medium 2 at an arbitrary timing.

As mentioned above, with the recorder according to Embodiment 8, the importance level in the CM segment can be set lower. In other words, even if a high importance level is set for the CM broadcast portion, the importance level can be modified to a lower level. Hence, it is possible to avoid the reproduction of the CM upon browsing the video recorded on the recording medium.

Note that the above description is directed to the case where the CM segment is detected according to the feature of the audio signal outputted from the audio encoder 72. However, it is possible to use the feature of the video signal outputted from the video encoder 71 for the CM segment detection, or a predetermined feature amount obtained in code compression on the video signal in the video encoder 71.

Also, the detection of the CM segment may be carried out according to either a feature extracted from one of the video signal and the audio signal or features extracted from both the video signal and the audio signal.

Further, the above description is directed to the case where the silent portion is detected to detect the CM segment and modify the importance level. However, it is also possible to detect the CM segment to thereby modify the importance level with any other methods. For example, it is also possible to determine, through detection whether the audio mode of the audio signal inputted to the recorder is a stereo mode or monaural mode to detect the CM segment. In other words, assuming that the main program adopts the monaural mode and the CM adopts the stereo mode, a border portion where the monaural mode and the stereo mode are switched is detected to thereby detect the CM-IN point and the CM-OUT point, enabling the detection of the CM segment. Besides, assuming that the main program adopts a bilingual broadcast mode but the CM does not adopt the bilingual broadcast mode, a portion not compliant with the bilingual broadcast mode may be detected as the CM segment.

Furthermore, if a video frame of a blank frame (or a black frame) is inserted at the border portion where the main program and the CM are switched, the black screen is detected, enabling the detection of the CM segment. Also, if the video signal corresponding to the main program includes a caption broadcast signal but the video signal corresponding to the CM includes no caption broadcast signal, the caption broadcast signal is detected, enabling the detection of the CM segment.

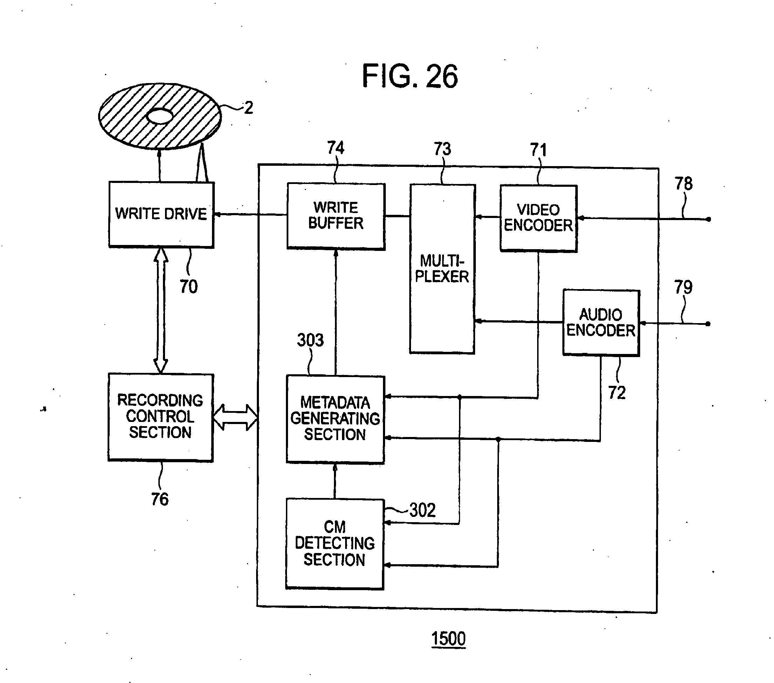

In addition, when the video signal or audio signal inputted to the recorder is superimposed with a signal for identifying the CM segment (hereinafter also referred to as CM identifying signal), the CM identifying signal is detected, enabling the detection of the CM segment. Note that if a feature of the video signal is used upon the detection of the CM segment, such as detecting the black screen, as shown in Figure 26, the recorder 1500 is configured so that the output from the video encoder 71 is inputted to the CM detecting section 302. Then, in the metadata generating section 303, the metadata is modified according to the CM detection chart obtained on the basis of the video signal or audio signal.

Further, the above description is directed to the case of using the method of detecting the silent potion alone for the CM segment detection, but any of the plural CM detection methods can be used, or the plural CM detection methods may be used in combination in the CM detecting section 300.

For example, it is possible to combine the method of detecting the border portion where the monaural mode and the stereo mode are switched is detected to thereby detect the CM segment, with the method of detecting the silent portion to thereby detect the CM segment. With the method of detecting the border portion where the monaural mode and the stereo mode are switched to thereby detect the CM segment, it is difficult to detect the CM segment in the case of using the stereo mode for both the main program and the CM. However, the method of detecting the CM segment allows detection of the CM segment most easily through detection of the switch-over of the audio mode, whereby a calculation load on the recorder can be reduced.

To that end, it is possible to adopt a method with which an audio mode of an audio signal of the television broadcast as a recording target is acquired in advance by using an electric program guide (hereinafter also referred to as EPG), and if the main program is compliant with the monaural mode or bilingual broadcast mode, the switch-over of the audio signal is detected to thereby detect the CM segment, or if the main program is compliant with the stereo mode, the silent portion is detected to thereby detect the CM segment.

Further, the result of the CM detection method based on detection of the switch-over of an audio mode and the result of the CM detection method based on detection of a silent portion may be held in separate data tables, which are used to adopt either of the methods by judging based on a predetermined reference which of the methods has been appropriate for the CM detection after completion of video recording or at an arbitrary timing.

Note that, for example, the number of detected CM segments (hereinafter also referred to as CM segment number) can be used as the predetermined reference. For example, in the case of performing detection of the CM segment based on detection of the switch-over of an audio mode with respect to the program where the main program adopts a stereo audio mode, the CM segment number is extremely smaller than the general number of CM segments estimated from the program broadcasting time. Then, in the above case, when the CM segment number is extremely smaller than the general number of CM segments estimated from the program broadcasting time, it can be judged that the CM detection based on detection of the switch-over of an audio mode has not been appropriate.

To be specific, for example, in the case where a predetermined threshold (threshold that allows judgment that the number is extremely smaller than the general number of CM segments estimated from the program broadcasting time) is set and the CM segment number is smaller than the threshold as a result of comparing the CM segment number and the threshold, it is possible to judge that the CM detection based on detection of the switch-over of an audio mode is not appropriate.

Further, the metadata obtained through modification of the importance level by using the method of detecting the switch-over of an audio mode to detect the CM segment, and the metadata obtained through modification of the importance level by using the method of detecting a silent portion to detect the CM segment may be both recorded on the recording medium 2, and the metadata to be used may be selected when data on the recording medium 2 is reproduced.

Note that the recording medium 2 on which the metadata and the like are recorded by the recorder described in Embodiment 8 can have data thereon reproduced by the apparatus for browsing video described in Embodiment 2.

Although the invention has been described by way of examples of preferred embodiments, it is to be understood that various other adaptations and modifications may be made within the spirit and scope of the invention. Therefore, it is the object of the appended claims to cover all such variations and modifications as come within the true spirit and scope of the invention.

## Claims

1. An apparatus for recording and reproducing video or audio on and from a recording medium (2) in which a video signal (78) or an audio signal (79) contained in a program is divided into a plurality of non-overlapping segments, an importance level is provided to the respective segments based on features of the audio signal thereof, and the importance level of the respective segments is recorded in metadata corresponding to the respective segments, comprising:
providing means (75) for providing the importance level to the respective segments;
extractor (15) for extracting the importance level of the respective segments;
comparator (16) for performing comparison between the importance level of the respective segments and a predetermined threshold;
searcher (16) for retrieving one or more segments whose importance levels are higher than the predetermined threshold according to a result from the comparison; and
reproducer (14, 123, 13) for reproducing video or audio corresponding to the one or more segments retrieved by the searcher,
wherein the providing means (75) comprises:
means for providing a sound class to each respective segment based on features of the audio signal of the respective segments, whereas the segments are classified into a plurality of sound classes;
means for providing an importance level to each segment based on said respective sound class; and
means for weighting said importance level based on the audio volume of said respective segment.

2. The apparatus according to claim 1, wherein the searcher (16) searches for the segment that corresponds to the importance level having a value larger than the threshold as a result of the comparison by the comparator(16).

3. The apparatus according to claim 1 or 2, wherein:
the comparator (16) performs comparison between a reproducing time of the video corresponding to the segment retrieved by the searcher (16) and a predetermined threshold; and
in a case where the reproducing time has a value smaller than the predetermined threshold as a result of the comparison by the comparator (16), the apparatus does not reproduce the video or audio corresponding to the retrieved segment.

4. The apparatus according to claim 1 or 2, wherein:
the comparator (16) performs comparison between a reproducing time of the video corresponding to the segment retrieved by the searcher (16) and a predetermined threshold; and
in a case where the reproducing time has a value smaller than the predetermined threshold as a result of the comparison by the comparator (16), the apparatus adjusts the reproducing time such that the reproducing time of video or audio reproduced by including the video or audio corresponding to the segment becomes equal to or larger than the predetermined threshold.

5. The apparatus according to any one of claims 1 to 4, further comprising:
image generator (16) for generating an image that indicates the result from the comparison by the comparator (16); and
a synthesizer (126) for synthesizing and outputting the image generated by the image generator (16) and the video of the segment retrieved by the searcher (16).

6. The apparatus according to claim 5, wherein the image generated by the image generator (16) includes an image that indicates fluctuation of a value of the importance level and an image that indicates a level of the predetermined threshold.

7. The apparatus according to claim 5 or 6, wherein the image generated by the image generator (16) includes an image that indicates the reproducing time of the video corresponding to the segment retrieved by the searcher (16) as a result of the comparison by the comparator (16).

8. The apparatus according to any one of claims 5 to 7, wherein the image generated by the image generator (16) includes an image that indicates a position of the video corresponding to the segment retrieved by the searcher (16) with respect to the entire video as a result of the comparison by the comparator (16).

9. A method for recording and reproducing video or audio on and from a recording medium (2) in which a video signal (78) or an audio signal (79) contained in a program is divided into a plurality of non-overlapping segments, an importance level is provided to the respective segments based on features of the audio signal thereof, and the importance level of the respective segments is recorded in metadata corresponding to the respective segments, comprising:
providing step for providing the importance level to the respective segments;
extracting step for extracting the importance level of the respective segments;
comparing step for performing comparison between the importance level of the respective segments and a predetermined threshold;
searching step for retrieving one or more segments whose importance levels are higher than the predetermined threshold according to a result from the comparison; and
reproducing step for reproducing video or audio corresponding to the one or more segments retrieved by the searcher,
wherein the providing step comprises:
step for providing a sound class to each respective segment based on features of an audio signal of the respective segments, whereas the segments are classified into a plurality of sound classes;
step for providing an importance level to each segment based on said respective sound class; and
step for weighting said importance level based on the audio volume of respective segment.

10. The apparatus according to claim 5, wherein the image generated by the image generator (16) includes:
a first image that indicates fluctuation of a value of the importance level; and
a second image that indicates the predetermined threshold.

11. The apparatus according to claim 5, wherein the image generated by the image generator (16) includes:
a first axis that indicates a time position of the video corresponding to the segment in the program;
a second axis that indicates the importance;
a first image that indicates fluctuation of the importance with respect to the video included in the program; and
a second image that indicates a position of the threshold on the second axis.

12. The apparatus according to claim 11, wherein the first image is generated with respect to a part of the video in the program to be an image indicating the fluctuation of the importance thereof which is expanded compared with a case where fluctuation of the importance with respect to the entire video in the program is indicated.

13. The apparatus according to claim 12, wherein the image generated by the image generator (16) includes:
a first image that indicates the reproducing time of the entire program;
a second image that indicates a position of the video having a high importance level with respect to the entire program.

14. The apparatus according to claim 10, wherein the first threshold is variable, a change in the first threshold is recognizable for the user, under a condition where the image generated by the synthesizer (126) is displayed on displayed means connected to the apparatus.

## Patentansprüche

1. Vorrichtung zum Aufzeichnen und Wiedergeben von Video oder Audio auf einem und von einem Aufzeichnungsmedium (2), in der ein Videosignal (78) oder ein Audiosignal (79), das in einem Programm enthalten ist, in eine Vielzahl von nichtüberlappenden Segmenten aufgeteilt wird, ein Wichtigkeitsniveau für die jeweiligen Segmente zur Verfügung gestellt wird auf der Grundlage von Merkmalen des zugehörigen Audiosignals, und das Wichtigkeitsniveau der jeweiligen Segmente in Metadaten entsprechend den jeweiligen Segmenten aufgezeichnet wird, aufweisend:
Bereitstellungsmittel (75) zum Bereitstellen des Wichtigkeitsniveaus für die jeweiligen Segmente;
Extraktionsmittel (15) zum Extrahieren des Wichtigkeitsniveaus der jeweiligen Segmente;
Vergleichsmittel (16) zum Durchführen eines Vergleichs zwischen dem Wichtigkeitsniveau der jeweiligen Segmente und einem vorherbestimmten Schwellenwert;
Suchmittel (16) zum Abrufen von einem oder mehreren Segmenten, deren Wichtigkeitsniveaus höher sind als der vorherbestimmte Schwellenwert entsprechend einem Ergebnis von dem Vergleich; und
Wiedergabemittel (14, 123, 13) zur Wiedergabe von Video oder Audio, das den durch das Suchmittel abgerufenen einen oder mehreren Segmenten entspricht,
wobei das Bereitstellungsmittel (75) aufweist:
Mittel zum Bereitstellen einer Geräuschklasse für jedes jeweilige Segment auf der Grundlage von Merkmalen des Audiosignals der jeweiligen Segmente, wobei die Segmente in eine Vielzahl von Geräuschklassen klassifiziert sind;
Mittel zum Bereitstellen eines Wichtigkeitsniveaus für jedes Segment auf der Grundlage der besagten jeweiligen Geräuschklasse; und
Mittel zum Gewichten des besagten Wichtigkeitsniveaus auf der Grundlage der Audio-Lautstärke des besagten jeweiligen Segments.

2. Vorrichtung nach Anspruch 1, wobei das Suchmittel (16) nach dem Segment sucht, dass dem Wichtigkeitsniveau entspricht, welches einen Wert größer als der Schwellenwert hat als Ergebnis des Vergleichs durch das Vergleichsmittel (16).

3. Vorrichtung nach Anspruch 1 oder 2, wobei
das Vergleichsmittel (16) einen Vergleich zwischen einer Wiedergabezeit des Videos, welches dem durch das Suchmittel (16) abgerufenen Segment entspricht, und einem vorherbestimmten Schwellenwert durchführt; und
in einem Fall in dem die Wiedergabezeit als Ergebnis des Vergleichs durch das Vergleichsmittel (16) einen kleineren Wert als der vorherbestimmte Schwellenwert hat, die Vorrichtung nicht das Video oder Audio entsprechend dem abgerufenen Segment wiedergibt.

4. Vorrichtung nach Anspruch 1 oder 2, wobei
das Vergleichsmittel (16) einen Vergleich zwischen einer Wiedergabezeit des Videos, welches dem durch das Suchmittel (16) abgerufenen Segment entspricht, und einem vorherbestimmten Schwellenwert durchführt; und
in einem Fall in dem die Wiedergabezeit als Ergebnis des Vergleichs durch das Vergleichsmittel (16) einen kleineren Wert als der vorherbestimmte Schwellenwert hat, die Vorrichtung die Wiedergabezeit derart anpasst, dass die Wiedergabezeit von Video oder Audio, wiedergegeben unter Einschluss des dem Segment entsprechenden Videos oder Audios, gleich dem oder größer als der vorherbestimmte Schwellenwert wird.

5. Vorrichtung nach einem der Ansprüche 1 bis 4, außerdem aufweisend:
Bildgenerator (16) zur Generierung eines Bildes, das das Ergebnis von dem Vergleich durch das Vergleichsmittel (16) anzeigt; und
einen Synthesizer (126) zur Synthetisierung und Ausgabe des durch den Bildgenerator (16) generierten Bildes und des Videos des durch das Suchmittel (16) abgerufenen Segments.

6. Vorrichtung nach Anspruch 5, wobei das durch den Bildgenerator (16) generierte Bild ein Bild, das die Fluktuation eines Wertes des Wichtigkeitsniveaus anzeigt, und ein Bild, das ein Niveau des vorherbestimmten Schwellenwerts anzeigt, enthält.

7. Vorrichtung nach Anspruch 5 oder 6, wobei das durch den Bildgenerator (16) generierte Bild ein Bild enthält, das die Wiedergabezeit des dem durch das Suchmittel (16) abgerufenen Segments entsprechenden Videos als Ergebnis des Vergleich durch das Vergleichsmittel (16) anzeigt.

8. Vorrichtung nach einem der Ansprüche 5 bis 7, wobei das durch den Bildgenerator (16) generierte Bild ein Bild enthält, das eine Position des Videos, welches dem durch das Suchmittel (16) abgerufenen Segment entspricht, in Bezug auf das gesamte Video als Ergebnis des Vergleichs durch das Vergleichsmittel (16) anzeigt.

9. Aufzeichnungs- und Wiedergabeverfahren von Video oder Audio auf und von einem Aufzeichnungsmedium (2) in dem ein Videosignal (78) oder ein Audiosignal (79), das in einem Programm enthalten ist, in eine Vielzahl von nichtüberlappenden Segmenten aufgeteilt wird, ein Wichtigkeitsniveau für die jeweiligen Segmente zur Verfügung gestellt wird auf der Grundlage von Merkmalen des zugehörigen Audiosignals, und das Wichtigkeitsniveau der jeweiligen Segmente in Metadaten entsprechend den jeweiligen Segmenten aufgezeichnet wird, aufweisend:
Bereitstellungsschritt zum Bereitstellen des Wichtigkeitsniveaus der jeweiligen Segmente;
Extraktionsschritt zum Extrahieren des Wichtigkeitsniveaus der jeweiligen Segmente;
Vergleichsschritt zum Durchführen eines Vergleichs zwischen dem Wichtigkeitsniveau derjeweiligen Segmente und einem vorherbestimmten Schwellenwert;
Suchschritt zum Abrufen von einem oder mehreren Segmenten, deren Wichtigkeitsniveaus höher sind als der vorherbestimmte Schwellenwert, entsprechend einem Ergebnis von dem Vergleich; und
Wiedergabeschritt zur Wiedergabe von Video oder Audio, das dem einen oder mehreren durch das Suchmittel abgerufenen Segmenten entspricht,
wobei der Bereitstellungsschritt aufweist:
Schritt zum Bereitstellen einer Geräuschklasse für jedes jeweilige Segment auf der Grundlage von Merkmalen eines Audiosignals des jeweiligen Segmentes, wobei die Segmente in eine Vielzahl von Geräuschklassen klassifiziert sind;
Schritt zum Bereitstellen eines Wichtigkeitsniveaus für jedes Segment auf der Grundlage der besagten jeweiligen Geräuschklasse; und
Schritt zum Gewichten des besagten Wichtigkeitsniveaus auf der Grundlage der Audio-Lautstärke des jeweiligen Segments.

10. Vorrichtung nach Anspruch 5, wobei das durch den Bildgenerator (16) generierte Bild enthält:
ein erstes Bild, das eine Fluktuation eines Wertes des Wichtigkeitsniveaus anzeigt; und
ein zweites Bild, das den vorherbestimmten Schwellenwert anzeigt.

11. Vorrichtung nach Anspruch 5, wobei das durch den Bildgenerator (16) generierte Bild enthält:
eine erste Achse, die eine Zeitposition des Videos, das dem Segment in dem Programm entspricht, anzeigt;
eine zweite Achse, die die Wichtigkeit anzeigt;
ein erstes Bild, das eine Fluktuation der Wichtigkeit in Bezug auf das in dem Programm enthaltene Video anzeigt; und
ein zweites Bild, das eine Position des Schwellenwerts auf der zweiten Achse anzeigt.

12. Vorrichtung nach Anspruch 11, wobei das erste Bild in Bezug auf einen Teil des Videos in dem Programm generiert wird, um ein Bild zu sein, das die Fluktuation der Wichtigkeit desselben anzeigt, welches ausgedehnt ist im Vergleich mit einem Fall, in dem die Fluktuation der Wichtigkeit in Bezug auf das gesamte Video in dem Programm angezeigt wird.

13. Vorrichtung nach Anspruch 12, wobei das durch den Bildgenerator (16) generierte Bild enthält:
ein erstes Bild, das die Wiedergabezeit des gesamten Programms anzeigt;
ein zweites Bild, das eine Position des Videos anzeigt, welches ein hohes Wichtigkeitsniveau in Bezug auf das gesamte Programm aufweist.

14. Vorrichtung nach Anspruch 10, wobei der erste Schwellenwert variabel ist, eine Veränderung in dem ersten Schwellenwert für den Nutzer erkennbar ist, unter einer Bedingung, dass das durch den Synthesizer (126) generierte Bild auf einem an die Vorrichtung angeschlossenen Anzeigemittel angezeigt wird.

## Revendications

1. Appareil pour enregistrer et reproduire du contenu vidéo ou audio sur et à partir d'un support d'enregistrement (2), dans lequel un signal vidéo (78) ou un signal audio (79) contenu dans un programme est divisé en une pluralité de segments sans chevauchement, un niveau d'importance est attribué aux segments respectifs sur la base de caractéristiques du signal audio connexe, et le niveau d'importance des segments respectifs est enregistré dans des métadonnées correspondant aux segments respectifs, comprenant :
- un moyen de fourniture (75) pour fournir le niveau d'importance aux segments respectifs ;
- un module d'extraction (15) pour extraire le niveau d'importance des segments respectifs ;
- un comparateur (16) pour mettre en oeuvre une comparaison entre le niveau d'importance des segments respectifs et un seuil prédéterminé ;
- un module de recherche (16) pour récupérer un ou plusieurs segments dont les niveaux d'importance sont supérieurs au seuil prédéterminé selon un résultat de la comparaison ; et
- un module de reproduction (14, 123, 13) pour reproduire du contenu vidéo ou audio correspondant audit un ou auxdits plusieurs segments récupérés par le module de recherche ;
- dans lequel le moyen de fourniture (75) comprend :
- un moyen pour fournir une classe sonore à chaque segment respectif sur la base de caractéristiques du signal audio des segments respectifs, moyennant quoi les segments sont classés en une pluralité de classes sonores ;
- un moyen pour attribuer un niveau d'importance à chaque segment sur la base de ladite classe sonore respective ; et
- un moyen pour pondérer ledit niveau d'importance sur la base du volume audio dudit segment respectif.

2. Appareil selon la revendication 1, dans lequel le module de recherche (16) recherche le segment qui correspond au niveau d'importance présentant une valeur supérieure au seuil, suite à la comparaison mise en oeuvre par le comparateur (16).

3. Appareil selon les revendications 1 ou 2, dans lequel :
- le comparateur (16) met en oeuvre une comparaison entre un instant de reproduction du contenu vidéo correspondant au segment récupéré par le module de recherche (16) et un seuil prédéterminé ; et
- dans un cas où l'instant de reproduction présente une valeur inférieure au seuil prédéterminé suite à la comparaison mise en oeuvre par le comparateur (16), l'appareil ne reproduit pas le contenu vidéo ou audio correspondant au segment récupéré.

4. Appareil selon les revendications 1 ou 2, dans lequel :
- le comparateur (16) met en oeuvre une comparaison entre un instant de reproduction du contenu vidéo correspondant au segment récupéré par le module de recherche (16) et un seuil prédéterminé ; et
- dans un cas où l'instant de reproduction présente une valeur inférieure au seuil prédéterminé suite à la comparaison mise en oeuvre par le comparateur (16), l'appareil ajuste l'instant de reproduction de sorte que l'instant de reproduction de contenu vidéo ou audio reproduit en incluant le contenu vidéo ou audio correspondant au segment devient égal ou supérieur au seuil prédéterminé.

5. Appareil selon l'une quelconque des revendications 1 à 4, comprenant en outre :
- un générateur d'image (16) destiné à générer une image qui indique le résultat de la comparaison mise en oeuvre par le comparateur (16) ; et
- un synthétiseur (126) destiné à synthétiser et à générer en sortie l'image générée par le générateur d'image (16) et le contenu vidéo du segment récupéré par le module de recherche (16).

6. Appareil selon la revendication 5, dans lequel l'image générée par le générateur d'image (16) inclut une image qui indique une fluctuation d'une valeur du niveau d'importance, et une image qui indique un niveau du seuil prédéterminé.

7. Appareil selon la revendication 5 ou 6, dans lequel l'image générée par le générateur d'image (16) inclut une image qui indique l'instant de reproduction du contenu vidéo correspondant au segment récupéré par le module de recherche (16) suite à la comparaison mise en oeuvre par le comparateur (16).

8. Appareil selon l'une quelconque des revendications 5 à 7, dans lequel l'image générée par le générateur d'image (16) inclut une image qui indique une position du contenu vidéo correspondant au segment récupéré par le module de recherche (16) relativement à la totalité de la vidéo suite à la comparaison mise en oeuvre par le comparateur (16).

9. Procédé d'enregistrement et de reproduction de contenu vidéo ou audio sur et à partir d'un support d'enregistrement (2), dans lequel un signal vidéo (78) ou un signal audio (79) contenu dans un programme est divisé en une pluralité de segments sans chevauchement, un niveau d'importance est attribué aux segments respectifs sur la base de caractéristiques du signal audio connexe, et le niveau d'importance des segments respectifs est enregistré dans des métadonnées correspondant aux segments respectifs, comprenant :
- une étape de fourniture consistant à fournir le niveau d'importance aux segments respectifs ;
- une étape d'extraction consistant à extraire le niveau d'importance des segments respectifs ;
- une étape de comparaison consistant à mettre en oeuvre une comparaison entre le niveau d'importance des segments respectifs et un seuil prédéterminé ;
- une étape de recherche consistant à récupérer un ou plusieurs segments dont les niveaux d'importance sont supérieurs au seuil prédéterminé selon un résultat de la comparaison ; et
- une étape de reproduction consistant à reproduire du contenu vidéo ou audio correspondant audit un ou auxdits plusieurs segments récupérés par le module de recherche ;
- dans lequel l'étape de fourniture comprend :
- une étape consistant à fournir une classe sonore à chaque segment respectif sur la base de caractéristiques d'un signal audio des segments respectifs, moyennant quoi les segments sont classés en une pluralité de classes sonores ;
- une étape consistant à attribuer un niveau d'importance à chaque segment sur la base de ladite classe sonore respective ; et
- une étape consistant à pondérer ledit niveau d'importance sur la base du volume audio dudit segment respectif.

10. Appareil selon la revendication 5, dans lequel l'image générée par le générateur d'image (16) inclut :
- une première image qui indique une fluctuation d'une valeur du niveau d'importance ; et
- une seconde image qui indique le seuil prédéterminé.

11. Appareil selon la revendication 5, dans lequel l'image générée par le générateur d'image (16) inclut :
- un premier axe qui indique une position temporelle du contenu vidéo correspondant au segment dans le programme ;
- un second axe qui indique l'importance ;
- une première image qui indique une fluctuation de l'importance par rapport au contenu vidéo inclus dans le programme ; et
- une seconde image qui indique une position du seuil sur le second axe.

12. Appareil selon la revendication 11, dans lequel la première image est générée relativement à une partie du contenu vidéo dans le programme, en tant qu'une image indiquant la fluctuation de l'importance connexe, qui est étendue en comparaison avec un cas où est indiquée la fluctuation de l'importance relativement à la totalité de la vidéo dans le programme.

13. Appareil selon la revendication 12, dans lequel l'image générée par le générateur d'image (16) inclut :
- une première image qui indique l'instant de reproduction de l'ensemble du programme ;
- une seconde image qui indique une position du contenu vidéo présentant un niveau d'importance élevé relativement à l'ensemble du programme.

14. Appareil selon la revendication 10, dans lequel le premier seuil est variable, et une modification du premier seuil est reconnaissable par l'utilisateur, dans un état où l'image générée par le synthétiseur (126) est affichée sur un moyen d'affichage connecté à l'appareil.
